(19) Europäisches Patentamt / European Patent Office / Office européen des brevets

(11) **EP 4 497 665 A1**

(12) **EUROPEAN PATENT APPLICATION**
published in accordance with Art. 153(4) EPC

(43) Date of publication:
**29.01.2025 Bulletin 2025/05**

(21) Application number: **23774932.0**

(22) Date of filing: **22.03.2023**

(51) International Patent Classification (IPC):
**B62D 57/02** (2006.01)   **B22F 12/50** (2021.01)
**B23K 9/032** (2006.01)   **B23K 9/04** (2006.01)
**B23K 9/12** (2006.01)   **B33Y 30/00** (2015.01)
**B60B 19/00** (2006.01)

(52) Cooperative Patent Classification (CPC):
**B62D 57/024; B22F 12/50; B23K 9/032;**
**B23K 9/04; B23K 9/12; B33Y 30/00; B60B 19/00;**
**B60B 19/006; B62D 57/02; B62D 63/04;**
B60B 2900/931; H01F 7/02

(86) International application number:
**PCT/JP2023/011159**

(87) International publication number:
**WO 2023/182337 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.03.2022   JP 2022046730**
**29.03.2022   JP 2022053375**

(71) Applicant: **Sumitomo Heavy Industries, Ltd.
Tokyo 141-6025 (JP)**

(72) Inventor: **ETO, Haruhiko
Yokosuka-shi, Kanagawa 237-8555 (JP)**

(74) Representative: **Louis Pöhlau Lohrentz
Patentanwälte
Postfach 30 55
90014 Nürnberg (DE)**

(54) **WALL-TRAVERSING VEHICLE**

(57)    A first wheel and a second wheel are attached to a vehicle body, the first wheel and the second wheel being attractable to a contact surface and being switchable between an attracted state and an attraction release state. A traveling motor rotates the first wheel and the second wheel. A control unit switches each of the first wheel and the second wheel between the attracted state and the attraction release state and controls rotation. The control unit realizes a first traveling mode for traveling on a first surface in a direction from the second wheel toward the first wheel, and a second traveling mode for traveling by setting the first wheel to the attraction release state and setting the second wheel to the attracted state in a state where the second wheel is in contact with the first surface, and rotating the second wheel until the first wheel comes into contact with a second surface rising from the first surface in a state where the first wheel is lifted off the first surface.

FIG. 5

## Description

Technical Field

The present invention relates to a wall-traversing vehicle including a wheel to be attracted to a contact surface.

Background Art

In shipbuilding and large crane manufacturing sites, a wall-traversing vehicle is known, which travels by being magnetically attracted to a surface of a large steel member having a curved surface shape and performs work such as welding, painting, and appearance inspection. PTL 1 discloses a wall-traversing vehicle including a magnetic attraction wheel. The wall-traversing vehicle disclosed in PTL 1 includes a spherical shell wheel having a spherical shape and a permanent magnet disposed in the spherical shell wheel. The permanent magnet is supported to be oscillatable in the spherical shell wheel. A direction in which the magnetic attraction force is generated can be controlled by rotaionally driving the permanent magnet by a magnet drive unit.

For example, when the wall-traversing vehicle moves from a horizontal floor surface to a wall surface that rises substantially vertically, and a front wheel comes into contact with the wall surface, the permanent magnet of the front wheel is directed toward the wall surface, and the front wheel is attracted to the wall surface. Since the front wheel is driven in this state, the front wheel climbs up the wall surface. When a rear wheel approaches the wall surface, the permanent magnet of the rear wheel is directed toward the wall surface, and the rear wheel is attracted to the wall surface. The wall-traversing vehicle climbs up the wall surface in a state where both the front wheel and the rear wheel are attracted to the wall surface.

Citation List

Patent Literature

[PTL 1] Japanese Unexamined Patent Publication No. 2022-007174

Summary of Invention

Technical Problem

On the wall-traversing vehicle including the attraction wheel, an object to be transported or a work tool for performing various types of work on the wall surface is loaded. Examples of the work tool loaded on the wall-traversing vehicle include various sensors such as a camera for appearance inspection, a welding torch, a cutting machine using gas or air plasma, a polishing tool such as a grinder, a painting spray gun, and a small robot arm for performing general-purpose work. A size of the load varies, and there is a case where the load protrudes forward of the front wheel. In a case where the load protrudes forward of the front wheel, when moving from the floor surface to the wall surface, the load comes into contact with the wall surface before the front wheel comes into contact with the wall surface. Since the front wheel cannot come into contact with the wall surface, the wall-traversing vehicle having the structure of the related art cannot move from the floor surface to the wall surface.

An object of the present invention is to provide a wall-traversing vehicle capable of stably traveling even when a load protrudes forward of a wheel.

Solution to Problem

An aspect of the present invention provides a wall-traversing vehicle including: a vehicle body; a first wheel and a second wheel that are attached to the vehicle body, that are attractable to a contact surface, and that are switchable between an attracted state and an attraction release state; a traveling motor that rotates the first wheel and the second wheel; and a control unit that switches each of the first wheel and the second wheel between the attracted state and the attraction release state and that controls rotation of the first wheel and the second wheel, in which the first wheel and the second wheel are attached at an interval in a traveling direction that is a direction in which the vehicle body moves when the first wheel and the second wheel are rotated, and the control unit realizes a first traveling mode for traveling on a first surface in a direction from the second wheel toward the first wheel, and a second traveling mode for traveling by setting the first wheel to the attraction release state and setting the second wheel to the attracted state in a state where the second wheel is in contact with the first surface, and rotating the second wheel until the first wheel comes into contact with a second surface rising from the first surface in a state where the first wheel is lifted off the first surface.

Advantageous Effects of Invention

In the second traveling mode, the first wheel is set to the attraction release state, and thus the first wheel can be lifted off the first surface. By rotating the second wheel in this state and traveling until the first wheel comes into contact with the second surface, the movement from the first surface to the second surface can be made.

Brief Description of Drawings

Fig. 1 is a side view of a wall-traversing vehicle according to an embodiment.
Fig. 2 is a front view of the wall-traversing vehicle according to the embodiment.
Fig. 3 is a schematic side view showing a positional relationship between the wall-traversing vehicle when traveling in a first traveling mode and a wall surface.
Fig. 4 is a side view showing a positional relationship among a wall-traversing vehicle when switching from the first traveling mode to a second traveling mode, a first surface, and a second surface.
Fig. 5 is a schematic side view showing a positional relationship among the wall-traversing vehicle when traveling in the second traveling mode, the first surface, and the second surface.
Fig. 6 is a schematic side view showing a positional relationship among the wall-traversing vehicle when traveling in a third traveling mode, the first surface, and the second surface.
Fig. 7 is a side view showing a positional relationship among the wall-traversing vehicle when switching from the third traveling mode to a wall surface traveling mode, the first surface, and the second surface.
Fig. 8 is a schematic side view showing a positional relationship among the wall-traversing vehicle when traveling in the wall surface traveling mode, the first surface, and the second surface.
Fig. 9 is a side view of a wall-traversing vehicle according to a comparative example.
Fig. 10 is a schematic side view showing a state where the wall-traversing vehicle moves on the first surface toward the second surface and an auxiliary wheel is in contact with the second surface.
Fig. 11 is a schematic side view showing a state where the first wheel is lifted off the first surface.
Fig. 12 is a side view of a wall-traversing vehicle according to a modification example of the embodiment shown in Figs. 1 to 8.
Fig. 13 is a side view of the wall-traversing vehicle according to the modification example of the embodiment shown in Figs. 1 to 8.
Fig. 14 is a side view of a wall-traversing vehicle according to another embodiment.
Fig. 15 is a side view showing a positional relationship among the wall-traversing vehicle, the first surface, and the second surface when the wall-traversing vehicle shown in Fig. 14 travels in the first traveling mode.
Fig. 16 is a side view showing a positional relationship among the wall-traversing vehicle, the first surface, and the second surface when the wall-traversing vehicle shown in Fig. 14 is switched from the third traveling mode to the fourth traveling mode.
Fig. 17 is a side view showing a positional relationship among the wall-traversing vehicle, the first surface, and the second surface when the wall-traversing vehicle shown in Fig. 14 travels in the fourth traveling mode.
Fig. 18 is a side view showing a positional relationship among the wall-traversing vehicle, the first surface, and the second surface when the wall-traversing vehicle shown in Fig. 14 is switched from the fourth traveling mode to the wall surface traveling mode.
Fig. 19A is a schematic side view showing a positional relationship among a first wheel, a second wheel, and an auxiliary wheel of the wall-traversing vehicle shown in Fig. 14, the first surface, and the second surface.
Fig. 19B is a schematic side view showing a positional relationship among the first wheel, the second wheel, and the auxiliary wheel of the wall-traversing vehicle shown in Fig. 14, the first surface, and the second surface.
Fig. 20 is a side view of a wall-traversing vehicle according to still another embodiment.
Fig. 21 is a schematic side view showing a state where the wall-traversing vehicle according to the embodiment shown in Fig. 20 travels on the first surface toward the second surface and an auxiliary wheel is in contact with the second surface.
Fig. 22 is a schematic side view showing a state where a first wheel of the wall-traversing vehicle according to the embodiment shown in Fig. 20 is lifted off the first surface.
Fig. 23 is a side view of a wall-traversing vehicle according to still another embodiment.
Fig. 24 is a schematic side view showing a state of an intermediate stage in which the wall-traversing vehicle according to the embodiment shown in Fig. 23 moves from the first surface to the second surface.
Fig. 25 is a schematic side view showing a positional relationship among the wall-traversing vehicle according to the embodiment shown in Fig. 23, the first surface, and the second surface in a case where an angle formed between the first surface and the second surface is an acute angle, that is, in a case where the second surface overhangs the first surface.

Fig. 26 is a schematic side view showing a positional relationship among the wall-traversing vehicle according to the embodiment shown in Fig. 23, the first surface, and the second surface in a case where the angle formed between the first surface and the second surface is an acute angle, that is, in a case where the second surface overhangs the first surface.

Fig. 27 is a schematic side view showing a positional relationship among the wall-traversing vehicle according to the embodiment shown in Fig. 23, the first surface, and the second surface in a case where the angle formed between the first surface and the second surface is an acute angle, that is, in a case where the second surface overhangs the first surface.

Fig. 28 is a perspective view of a wall-traversing vehicle according to still another embodiment.

Fig. 29 is a front view of the wall-traversing vehicle according to the embodiment shown in Fig. 28.

Fig. 30 is a front view of the wall-traversing vehicle when traveling on a wall surface having a concave shape.

Fig. 31 is a perspective view showing a wall surface in which the second surface having a concave shape rises from the first surface having a convex shape.

Fig. 32 is a conceptual diagram showing a modeling system according to a second embodiment.

Fig. 33 is a perspective view of a modeling robot according to the second embodiment.

Fig. 34 is a view showing a periphery of a distal end portion of a torch according to the second embodiment.

Fig. 35 is a block diagram showing a schematic control configuration of the modeling system according to the second embodiment.

Fig. 36A is a view showing a modeling process according to the second embodiment.

Fig. 36B is a view showing the modeling process according to the second embodiment.

Fig. 37A is a diagram showing the modeling process according to the second embodiment.

Fig. 37B is a view showing the modeling process according to the second embodiment.

Description of Embodiments

<First Embodiment>

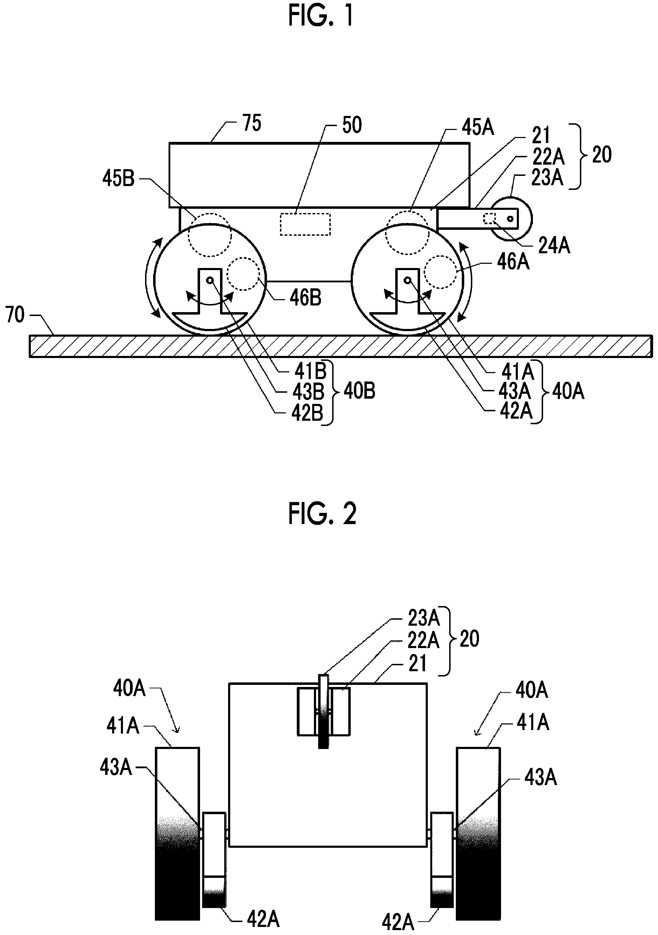

A wall-traversing vehicle according to an embodiment will be described with reference to the drawings. Figs. 1 and 2 are a side view and a front view of the wall-traversing vehicle according to the present embodiment.

The wall-traversing vehicle according to the present embodiment includes a vehicle body 20, and two first wheels 40A and two second wheels 40B attached to the vehicle body 20. The two first wheels 40A and the two second wheels 40B are attached at an interval in a traveling direction (lateral direction in Fig. 1) when the first wheels 40A and the second wheels 40B are rotated. In the present specification, a side on which the first wheel 40A is located with respect to the second wheel 40B is referred to as "front", and a side opposite thereto is referred to as "rear". The two first wheels 40A are attached at the same position in the traveling direction, and the two second wheels 40B are also attached at the same position in the traveling direction.

The first wheel 40A includes a rotating body 41A, an oscillating magnet 42A, and an axle 43A. The rotating body 41A rotates about the axle 43A as a rotation center, and the oscillating magnet 42A oscillates about the axle 43A as an oscillation center independently of the rotation of the rotating body 41A. A traveling motor 45A applies the rotation force to the rotating body 41A. In the present specification, rotating the rotating body 41A of the first wheel 40A may be referred to as "rotating the first wheel 40A", and rotating the rotating body 41B of the second wheel 40B may be referred to as "rotating the second wheel 40B".

An oscillating magnet posture control motor 46A controls a posture of the oscillating magnet 42A. That is, the oscillating magnet posture control motor 46A oscillates the oscillating magnet 42A, and stops the oscillating magnet at a target position. In addition, the oscillating magnet 42A can be brought into a freely-oscillating state.

The first wheels 40A (Fig. 2) are disposed on the right and left sides of the vehicle body 20. The oscillating magnet 42A is disposed between each rotating body 41A and a main body 21 of the vehicle body 20. An oscillation center axis of the oscillating magnet 42A coincides with a rotation center axis of the first wheel 40A. A length from the oscillation center axis to a distal end of the oscillating magnet 42A is shorter than a radius of the rotating body 41A. An inside of the rotating body 41A may be formed as a cavity, and the oscillating magnet 42A may be disposed inside the rotating body 41A. Alternatively, the oscillating magnet 42A may be disposed outside each rotating body 41A around the vehicle body 20.

The second wheel 40B (Fig. 1) also has the same structure as the first wheel 40A. That is, the second wheel 40B includes a rotating body 41B, an oscillating magnet 42B, and an axle 43B. A traveling motor 45B applies the rotation force to the rotating body 41B of the second wheel 40B. An oscillating magnet posture control motor 46B oscillates the oscillating magnet 42B of the second wheel 40B, and stops the oscillating magnet 42B at a target position. In addition, the oscillating magnet 42B can be brought into a freely-oscillating state.

When the first wheel 40A and the second wheel 40B are brought into contact with a wall surface 70 made of a magnetic material such as steel, and the oscillating magnet 42A is brought into a freely-oscillating state, the oscillating magnet 42A is stabilized in a posture facing the wall surface 70 by the magnetic force acting between the oscillating magnet 42A and the wall surface 70. In this case, the first wheel 40A is attracted to the wall surface 70 by the magnetic force. When the oscillating magnet 42A is oscillated and the oscillating magnet 42A is stopped in a posture in which the oscillating magnet 42A faces a direction of the vehicle body 20, the magnetic force between the oscillating magnet 42A and the wall surface 70 is weakened, and a state where the first wheel 40A is attracted to the wall surface 70 is released. In this way, the posture of the oscillating magnet 42A is controlled, so that the attraction force of the first wheel 40A to the wall surface 70 can be changed.

The same applies to the second wheel 40B, that is, the attraction force of the second wheel 40B to the wall surface 70 can be changed. A state where each of the first wheel 40A and the second wheel is attracted to the wall surface 70 is referred to as an "attracted state", and a state where the attraction is released is referred to as an "attraction release state".

A control unit 50 is loaded in the vehicle body 20. The control unit 50 rotates the rotating bodies 41A and 41B in a desired direction by controlling the traveling motors 45A and 45B. Further, the control unit 50 switches the state of each of the first wheel 40A and the second wheel 40B between the attracted state and the attraction release state by controlling the oscillating magnet posture control motors 46A and 46B.

The vehicle body 20 includes the main body 21, a protrusion portion 22A, and an auxiliary wheel 23A. The protrusion portion 22A protrudes forward of the main body 21. The auxiliary wheel 23A is rotatably attached to a distal end of the protrusion portion 22A. The auxiliary wheel 23A is a driven wheel, is not driven to rotate actively using a motor or the like, and is rotated passively. A rotation center axis of the auxiliary wheel 23A is parallel to the rotation center axis of the first wheel 40A. The auxiliary wheel 23A is attached to a position protruding forward of the first wheel 40A. The auxiliary wheel 23A can be referred to as a distal end portion located on the most front side of the wall-traversing vehicle.

A contact sensor 24A is attached to the protrusion portion 22A. The contact sensor 24A detects that the auxiliary wheel 23A comes into contact with an obstacle. A detection result of the contact sensor 24A is input to the control unit 50. The control unit 50 executes control of the rotation of the rotating bodies 41A and 41B and control of the switching of the state of attraction of the first wheels 40A and the second wheels 40B, based on the detection result of the contact sensor 24A.

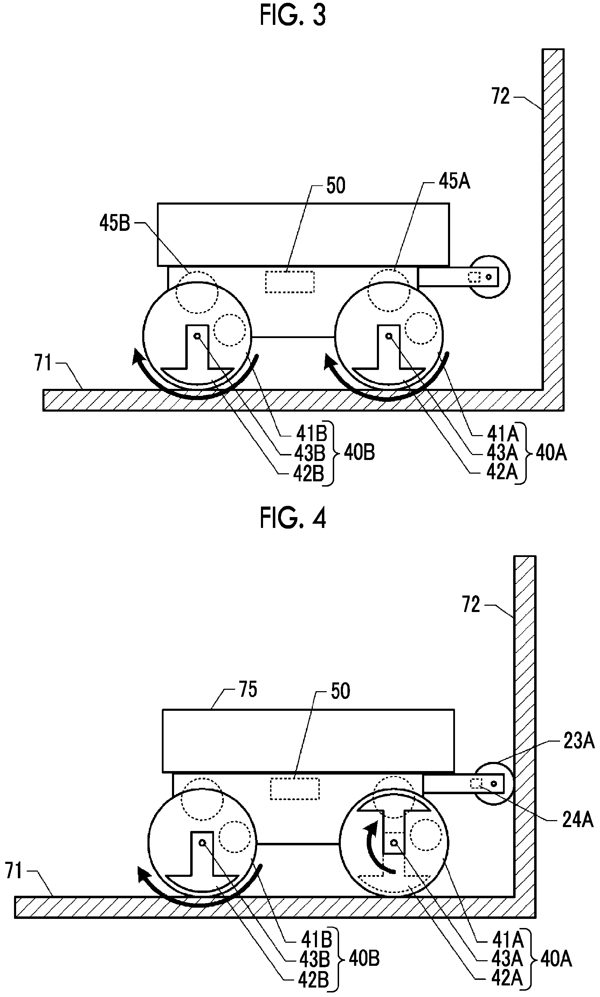

The wall-traversing vehicle according to the present embodiment can travel in a plurality of traveling modes, specifically, in any one of a first traveling mode, a second traveling mode, a third traveling mode, and a wall surface traveling mode. Hereinafter, these traveling modes will be described with reference to Figs. 3 to 7.

Fig. 3 is a schematic side view showing a positional relationship between the wall-traversing vehicle when traveling in the first traveling mode and the wall surface. A second surface 72 rises substantially vertically from a first surface 71 that is substantially horizontal. The wall-traversing vehicle travels, with the front side directed toward the second surface 72, toward the second surface 72 in the first traveling mode.

In the first traveling mode, the first wheel 40A and the second wheel 40B may be in the attracted state or in the attraction release state. The control unit 50 rotates the rotating body 41A of the first wheel 40A and the rotating body 41B of the second wheel 40B in an arrow direction by controlling the traveling motors 45A and 45B. As a result, the wall-traversing vehicle travels on the first surface 71. Hereinafter, rotating the rotating body 41A of the first wheel 40A may be simply referred to as "rotating the first wheel 40A". The same applies to the second wheel 40B.

Fig. 4 is a side view showing a positional relationship among the wall-traversing vehicle when switching from the first traveling mode to the second traveling mode, the first surface 71, and the second surface 72. When the wall-traversing vehicle travels toward the second surface 72, the auxiliary wheel 23A comes into contact with the second surface 72. When the auxiliary wheel 23A comes into contact with the second surface 72, the contact sensor 24A detects the contact, and the control unit 50 acquires the detection information from the contact sensor 24A.

When the control unit 50 detects that the auxiliary wheel 23A comes into contact with the second surface 72, the control unit 50 switches the traveling mode of the wall-traversing vehicle from the first traveling mode to the second traveling mode. Specifically, the first wheel 40A is set to the attraction release state, and the second wheel 40B is set to the attracted state. For example, the posture of the oscillating magnet 42A of the first wheel 40A is changed to be directed in a direction of the vehicle body 20. As a result, the attraction force of the first wheel 40A to the first surface 71 is weakened to be substantially zero. Further, the application of the rotation force to the first wheel 40A is stopped, and the rotation force is applied to the second wheel 40B.

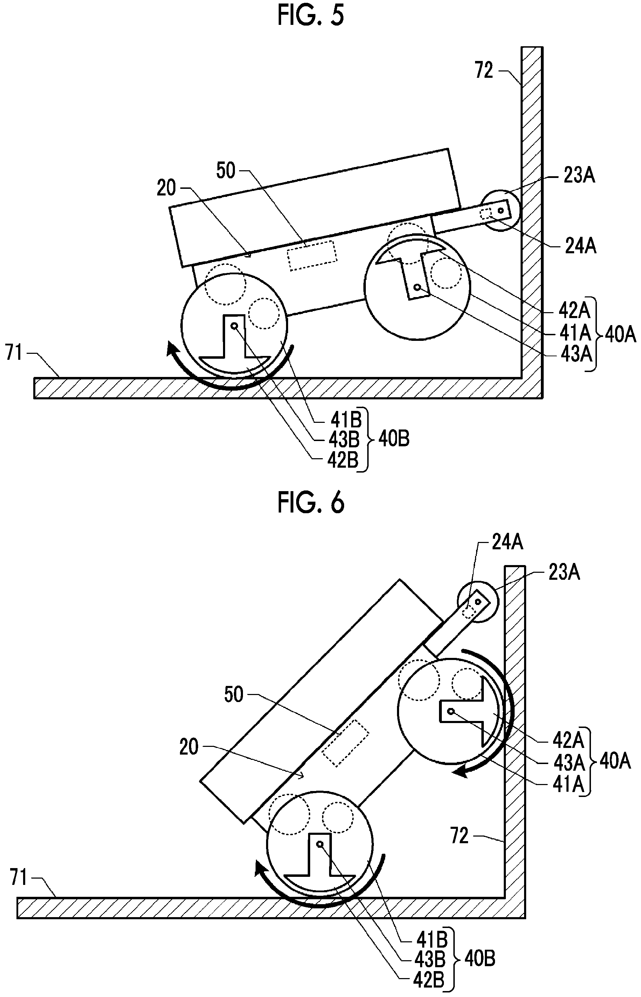

Fig. 5 is a schematic side view showing a positional relationship among the wall-traversing vehicle when traveling in the second traveling mode, the first surface 71, and the second surface 72. By setting the second wheel 40B to the attracted state to rotate the second wheel 40B and setting the first wheel 40A to the attraction release state in a state where the auxiliary wheel 23A is in contact with the second surface 72, the moment in a direction (counterclockwise in Fig. 5) in which the first wheel 40A is lifted off the first surface 71 acts on the vehicle body 20. As a result, the auxiliary wheel 23A moves upward along the second surface 72, and the first wheel 40A is lifted off the first surface 71. By setting the second wheel 40B to the attracted state to rotate the second wheel 40B in an arrow direction, the auxiliary wheel 23A moves upward along the second surface 72.

In the second traveling mode, since the second wheel 40B is set to the attracted state, even when an inclination angle of the vehicle body 20 with respect to the first surface 71 is changed, the oscillating magnet 42B of the second wheel 40B always faces a direction of the first surface 71 by the magnetic force. Therefore, a state where the second wheel 40B is attracted to the first surface 71 is maintained. In addition, since the first wheel 40A is set to the attraction release state, the first wheel 40A is easily lifted off the first surface 71.

Fig. 6 is a schematic side view showing a positional relationship among the wall-traversing vehicle when traveling in the third traveling mode, the first surface 71, and the second surface 72. When the wall-traversing vehicle continues traveling in the second traveling mode, the rotating body 41A of the first wheel 40A comes into contact with the second surface 72, and the auxiliary wheel 23A is separated from the second surface 72. The contact sensor 24A detects that the auxiliary wheel 23A is separated from the second surface 72.

When the control unit 50 detects that the auxiliary wheel 23A is separated from the second surface 72 based on the information from the contact sensor 24A, the control unit 50 sets the first wheel 40A in the attracted state and rotates the first wheel 40A in a forward direction indicated by an arrow. The oscillating magnet 42A of the first wheel 40A oscillates to face a direction of the second surface 72, and the attraction force of the first wheel 40A to the second surface 72 is increased. As a result, the first wheel 40A travels on the second surface 72, and the second wheel 40B travels on the first surface 71. Therefore, the inclination angle of the vehicle body 20 with respect to the first surface 71 is increased.

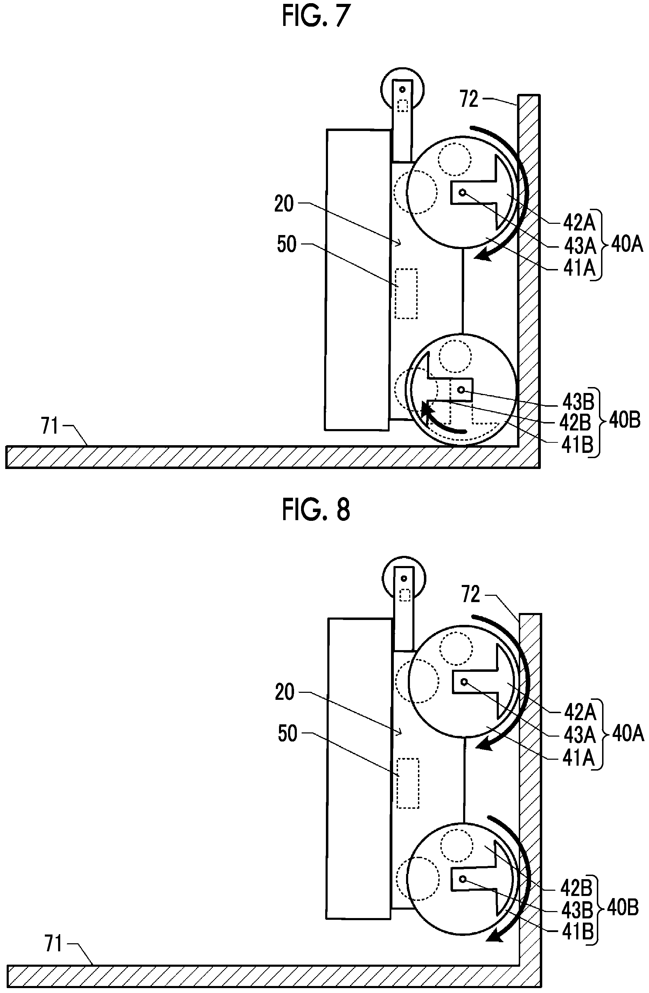

Fig. 7 is a side view showing a positional relationship among the wall-traversing vehicle when switching from the third traveling mode to a wall surface traveling mode, the first surface 71, and the second surface 72. When the wall-traversing vehicle continues traveling in the third traveling mode, the rotating body 41B of the second wheel 40B comes into contact with the second surface 72. In the third traveling mode, the second wheel 40B is in a state of being attracted to the first surface 71. This attraction force acts in a direction in which the wall-traversing vehicle is prevented from moving upward along the second surface 72.

In addition, the rotation force of the second wheel 40B acts in a direction in which the second wheel 40B travels on the first surface 71, and does not act in a direction in which the second wheel 40B moves upward along the second surface 72. Therefore, even when the rotation force is applied to the rotating body 41B of the second wheel 40B, the rotating body 41B hardly rotates due to the friction force between the rotating body 41B and the first surface 71. For example, it is possible to detect that the rotating body 41B comes into contact with the second surface 72 from the relationship between the rotation force applied to the rotating body 41B of the second wheel 40B and the rotation speed of the rotating body 41B.

When the control unit 50 detects that the rotating body 41B of the second wheel 40B comes into contact with the second surface 72, the control unit 50 sets the second wheel 40B in the attraction release state and stops the application of the rotation force. As a result, the attraction force of the second wheel 40B to the first surface 71 is weakened to be substantially zero. The wall-traversing vehicle moves the second surface 72 upward by the rotation of the first wheel 40A, and the rotating body 41B of the second wheel 40B is lifted off the first surface 71. For example, the lifting-off of the second wheel 40B from the first surface 71 can be estimated from a rotation angle of the rotating body 41A of the first wheel 40A from when the second wheel 40B is set to the attraction release state.

When the control unit 50 detects that the rotating body 41B of the second wheel 40B comes into contact with the second surface 72, the control unit 50 may oscillate the oscillating magnet 42B to be directed toward the second surface 72 such that the second wheel 40B is in the attracted state with respect to the second surface 72.

Fig. 8 is a schematic side view showing a positional relationship among the wall-traversing vehicle when traveling in the wall surface traveling mode, the first surface 71, and the second surface 72. When it is determined that the rotating body 41B of the second wheel 40B is separated from the first surface 71, the control unit 50 sets the second wheel 40B in the attracted state and rotates the second wheel 40B in the forward direction. The oscillating magnet 42B of the second wheel 40B faces a direction of the second surface 72 by the magnetic force thereof, and the second wheel 40B is attracted to the second surface 72.

By rotating the rotating bodies 41A and 41B are rotated in the forward direction in a state where the first wheel 40A and the second wheel 40B are both attracted to the second surface 72, the wall-traversing vehicle moves upward on the second surface 72. In the first traveling mode (Fig. 3) for traveling on the first surface 71 that is substantially horizontal, the first wheel 40A and the second wheel 40B may be set to the attracted state or the attraction release state. For example, in a case where the first surface 71 is made of a non-magnetic material such as concrete or asphalt, no attraction force is generated between the oscillating magnet 42B and the first surface 71. In this case, the traction force for traveling is generated between the first wheels 40A and the second wheels 40B and the first surface 71 by a dead-weight of the wall-traversing vehicle. In the wall surface traveling mode in which the wall-traversing vehicle travels on the second surface 72 that is substantially vertical, both the first wheel 40A and the second wheel 40B are set to the attracted state.

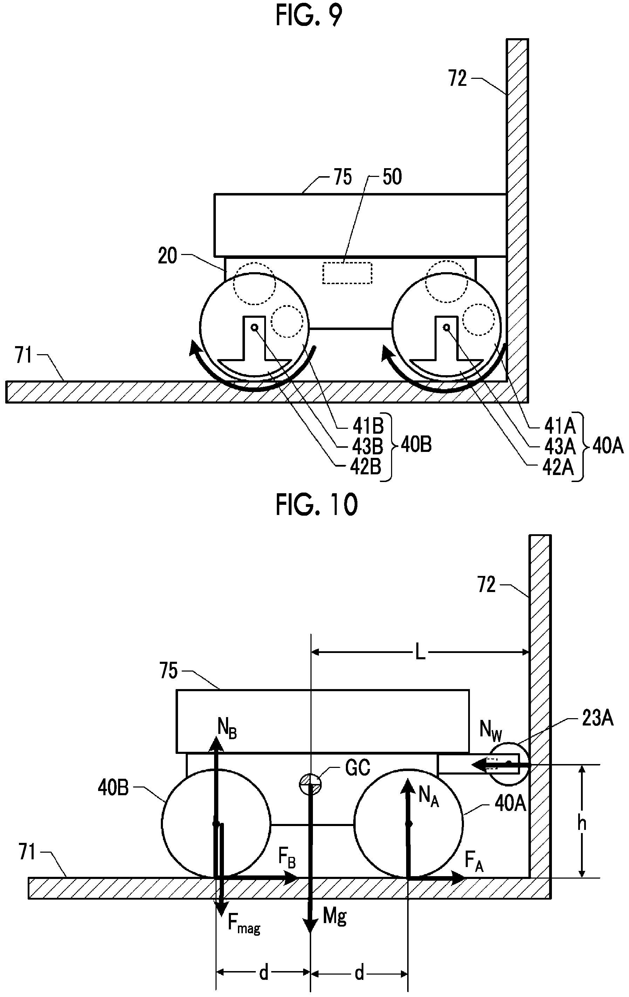

Next, a superior effect of the present embodiment will be described while comparing with a comparative example shown in Fig. 9. Fig. 9 is a side view of a wall-traversing vehicle according to the comparative example. In the comparative example, the protrusion portion 22A and the auxiliary wheel 23A are not provided in the vehicle body 20. A load 75 protrudes forward of the first wheel 40A. When the wall-traversing vehicle travels on the first surface 71 toward the second surface 72, the load 75 comes into contact with the second surface 72 before the first wheel 40A comes into contact with the second surface 72.

In this state, in a case where the first wheel 40A is set to the attraction release state, the second wheel 40B is set to the attracted state, and the rotation force is applied to the second wheel 40B, the moment in a direction in which the first wheel 40A is lifted off the first surface 71 is generated. However, the friction force between the load 75 and the second surface 72 acts in a direction to cancel this moment. In a case where the moment caused by the maximum friction force generated between the load 75 and the second surface 72 is larger than the moment for lifting-off of the first wheel 40A from the first surface 71, the first wheel 40A is not lifted off the first surface 71. Therefore, the wall-traversing vehicle cannot move from the first surface 71 to the second surface 72.

On the other hand, in the present embodiment, as shown in Fig. 4, the auxiliary wheel 23A comes into contact with the second surface 72 before the load 75 comes into contact with the second surface 72. The rolling friction force between the auxiliary wheel 23A and the second surface 72 is smaller than the maximum friction force between the load 75 and the second surface 72. Therefore, the first wheel 40A can be lifted off the first surface 71 by rotating the second wheel 40B in the forward direction in a state where the auxiliary wheel 23A is in contact with the second surface 72. In this state, the traveling can be made in the second traveling mode (Fig. 5) until the first wheel 40A comes into contact with the second surface 72.

Thereafter, the wall-traversing vehicle can move from the first surface 71 to the second surface 72 and travel on the second surface 72 by traveling in the third traveling mode and the wall surface traveling mode.

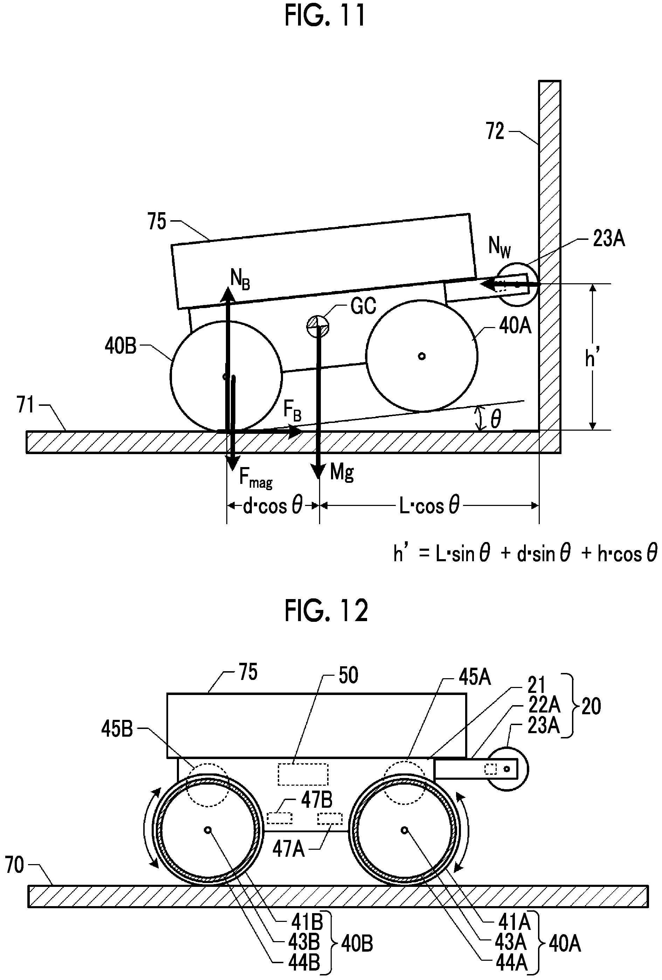

Next, a preferable height of the auxiliary wheel 23A from the first surface 71 will be described with reference to Figs. 10 and 11. Fig. 10 is a schematic side view showing a state where the wall-traversing vehicle travels on the first surface 71 toward the second surface 72 and the auxiliary wheel 23A is in contact with the second surface 72. The first surface 71 is parallel to a horizontal plane, and the second surface 72 rises at a right angle from the first surface 71.

In order for the wall-traversing vehicle to move upward along the second surface 72, the moment in a direction in which the first wheel 40A is lifted off the first surface 71 (counterclockwise moment in Fig. 10) in a state shown in Fig. 10 has to act on the wall-traversing vehicle. The center of gravity of the wall-traversing vehicle is denoted by GC, and each parameter is defined as follows. It is assumed that a condition is satisfied in which distances in an advancing direction from the center of gravity GC to a ground contact point of the first wheel 40A and a ground contact point of the second wheel 40B are equal. The wall-traversing vehicle can travel forward and rearward without distinction, and generally, this condition is substantially satisfied.

$N_A$: normal force received by first wheel 40A from first surface 71
$N_B$: normal force received by second wheel 40B from first surface 71
$N_W$: normal force received by auxiliary wheel 23A from second surface 72
$F_A$: driving force of first wheel 40A
$F_B$: driving force of second wheel 40B
$F_{mag}$: attraction force by oscillating magnet 42B (Fig. 1) of second wheel 40B
M: total mass of wall-traversing vehicle and load 75
g: gravitational acceleration
d: distance in advancing direction from center of gravity GC to ground contact point of first wheel 40A and ground contact point of second wheel 40B
L: distance in traveling direction from center of gravity GC to ground contact point of auxiliary wheel 23A
h: height from first surface 71 to auxiliary wheel 23A when first wheel 40A and second wheel 40B are in contact with first surface 71

Since the attraction force of the oscillating magnet 42A (Fig. 1) of the first wheel 40A generates the clockwise moment with respect to the wall-traversing vehicle, in order to rotate the wall-traversing vehicle counterclockwise, it is preferable to set the first wheel 40A in the attraction release state. The following expression holds true from the balance of the force in the traveling direction and the force in the vertical direction.

[Expression 1]

$$N_A = \frac{Mg}{2}$$

$$N_B = \frac{Mg}{2} + F_{mag}$$

$$N_W = F_A + F_B \cdots (1)$$

The wall-traversing vehicle rotates counterclockwise when the moment about the ground contact point of the second wheel 40B as a rotation center satisfies the following expression.

[Expression 2]

$$2N_A d + N_W h > Mgd \cdots (2)$$

The following expression is obtained from Expressions (1) and (2). Here, it is assumed that $N_W > 0$.

[Expression 3]

$$h > 0 \cdots (3)$$

That is, when the auxiliary wheel 23A is located at a position higher than the first surface 71, the wall-traversing vehicle rotates counterclockwise in the state of Fig. 10.

Fig. 11 is a schematic side view showing a state where the first wheel 40A is lifted off the first surface 71. The inclination angle of the wall-traversing vehicle is denoted by $\theta$. In order for the wall-traversing vehicle to climb up the second surface 72, the counterclockwise moment has to act on the wall-traversing vehicle even in a state where the first wheel 40A is lifted off the first surface 71.

When the first wheel 40A is lifted off the first surface 71, the normal force $N_A$ acting on the first wheel 40A and the driving force $F_A$ generated by the first wheel 40A are both zero. When a contact point of the second wheel 40B is used as a rotation center, the gravity generates the clockwise moment, and the normal force $N_W$ acting on the auxiliary wheel 23A generates the counterclockwise moment. In order to generate the counterclockwise moment in the wall-traversing vehicle, the following expression need only be satisfied.

[Expression 4]

$$F_B(L \sin \theta + d \sin \theta + h \cos \theta) > Mgd \cos \theta \cdots (4)$$

The counterclockwise moment has to act even when the first wheel 40A is lifted off the first surface 71, and thus Expression (4) has to hold true even when $\theta = 0$. When $\theta = 0$ in Expression (4), the following condition is obtained.

[Expression 5]

$$F_B h > Mgd \cdots (5)$$

When the inclination angle $\theta$ is increased from 0° to 90°, the left side of Expression (4) is monotonically increased and the right side is monotonically decreased. Therefore, when Expression (5) is satisfied, Expression (4) is also satisfied. Therefore, in a case where the driving force $F_B$ of the second wheel 40B, the total mass M of the wall-traversing vehicle and the load 75, and the distance d are determined, the height h of the auxiliary wheel 23A may be determined such that Expression (5) is satisfied.

Next, a modification example of the embodiment shown in Figs. 1 to 8 will be described with reference to Fig. 12. Fig. 12 is a side view of a wall-traversing vehicle according to the present modification example. A wall-traversing vehicle according to the present modification example includes electromagnets 44A and 44B instead of the oscillating magnets 42A and 42B of the embodiment shown in Fig. 1, and includes electromagnet drive circuits 47A and 47B instead of the oscillating magnet posture control motors 46A and 46B.

The electromagnets 44A and 44B are disposed over an entire circumference slightly inside outer peripheral surfaces of the rotating body 41A of the first wheel 40A and the rotating body 41B of the second wheel 40B, respectively.

The electromagnet drive circuits 47A and 47B cause a current to flow through the electromagnets 44A and 44B, respectively, in response to an instruction from the control unit 50. When a current flows through the electromagnet 44A, the electromagnet 44A generates the magnetic force, and the first wheel 40A is set to the attracted state. When a current flowing through the electromagnet 44A is stopped, the magnetic force of the electromagnet 44A is eliminated, and the first wheel 40A is set to the attraction release state. Similarly, the attracted state and the attraction release state of the second wheel 40B can be switched by switching the on/off of a current flowing through the electromagnet 44B.

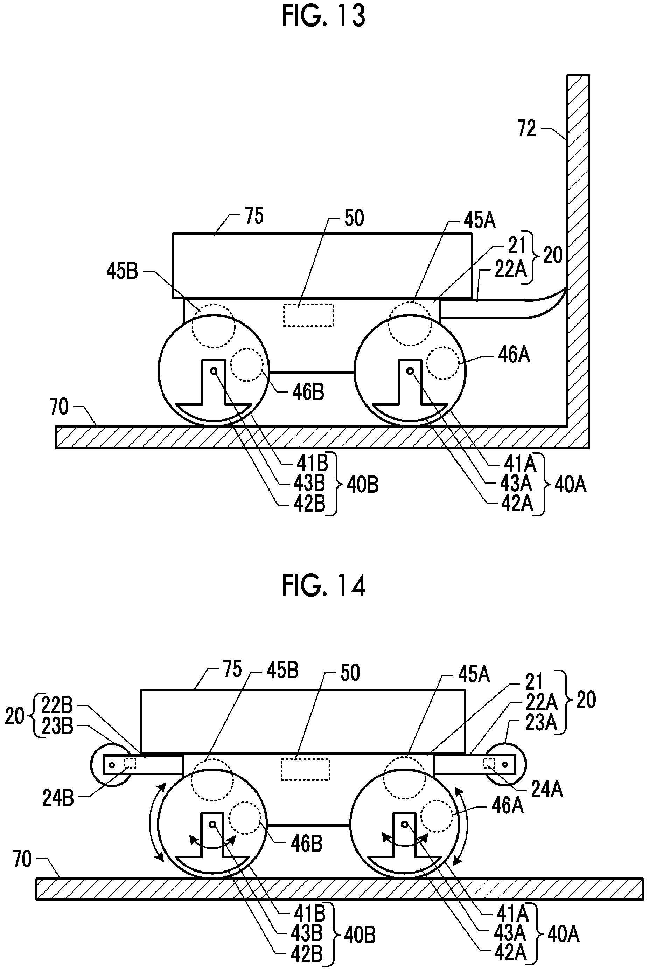

Next, another modification example of the embodiment shown in Figs. 1 to 8 will be described with reference to Fig. 13. Fig. 13 is a side view of a wall-traversing vehicle according to the present modification example. In the embodiment shown in Fig. 1, the auxiliary wheel 23A is attached to the distal end of the protrusion portion 22A. On the other hand, in the present modification example, the auxiliary wheel 23A is not attached to the distal end of the protrusion portion 22A, and instead, a distal end portion of the protrusion portion 22A is bent upward like a distal end of a ski board.

When the distal end of the protrusion portion 22A comes into contact with the second surface 72, the distal end portion of the protrusion portion 22A is elastically deformed. When the distal end portion of the protrusion portion 22A is elastically deformed, the distal end of the protrusion portion 22A moves on the second surface 72, and the dynamic friction force acts between the distal end portion and the second surface 72. Since the dynamic friction force is smaller than a static friction force, the distal end of the protrusion portion 22A is likely to slide against the second surface 72. Therefore, the moment acting in a direction to cancel the moment generated in the vehicle body 20 by the rotation of the second wheel 40B is reduced, and the vehicle body 20 is inclined in a direction in which the first wheel 40A is lifted off the first surface 71.

As in the present modification example, instead of the configuration in which the auxiliary wheel 23A is attached to the distal end of the protrusion portion 22A, the distal end of the protrusion portion 22A may be bent upward.

Next, various other modification examples of the embodiment shown in Figs. 1 to 8 will be described.

A distance of the auxiliary wheel 23A that protrudes forward of the first wheel 40A may be adjustable. For example, the protrusion portion 22A may be expandable and contractible by using a slider or the like in the protrusion portion 22A. The protrusion portion 22A may be expanded and contracted such that the auxiliary wheel 23A is located forward of the load 75 in accordance with a size of the load 75 loaded on the vehicle body. The protrusion portion 22A may be expanded and contracted manually or electrically.

In the embodiment shown in Figs. 1 to 8, the first wheel 40A is set to the attraction release state during a period of the traveling in the second traveling mode (Fig. 5). However, the first wheel 40A may be set to the attracted state after a lifting-off height of the first wheel 40A from the first surface 71 exceeds a certain height. When the first wheel 40A is substantially separated from the first surface 71 to the extent that the magnetic force does not act, the first wheel 40A is not attracted to the first surface 71 even when the first wheel 40A is set to the attracted state. When the first wheel 40A approaches the second surface 72, the oscillating magnet 42A of the first wheel 40A faces a direction of the second surface 72 by the magnetic force and is attracted to the second surface 72.

In the embodiment shown in Figs. 1 to 8, a case is described in which the wall-traversing vehicle moves from the first surface 71, which is substantially horizontal, to the second surface 72, which is substantially vertical. However, the first surface 71 does not necessarily have to be substantially horizontal. For example, the wall-traversing vehicle according to the embodiment shown in Figs. 1 to 8 can travel downward along the first surface 71 substantially perpendicular to the horizontal plane and move on the second surface 72 that is substantially horizontal.

In a case where the first surface 71 is a wall surface that is substantially perpendicular to the horizontal plane and the second surface 72 is a ceiling that faces a gravity direction, the wall-traversing vehicle can move from the first surface 71 to the second surface 72 by using a permanent magnet for the auxiliary wheel 23A. When the second traveling mode shown in Fig. 5 is set, the auxiliary wheel 23A is attracted to the second surface 72 by the magnetic force, and thus the fall of the wall-traversing vehicle is avoided. When the first wheel 40A comes into contact with the second surface 72 to be in the attracted state, and then the counterclockwise moment in Fig. 5 generated by a traction force between the first wheel 40A and the second wheel 40B exceeds the clockwise moment generated by the attraction force of the auxiliary wheel 23A, the auxiliary wheel 23A is separated from the second surface 72, and the wall-traversing vehicle can transition to the third traveling mode (Fig. 6).

In the embodiment shown in Figs. 1 to 8, the control unit 50 autonomously executes control of the rotation of the first wheel 40A and the second wheel 40B, and control of the switching between the attracted state and the attraction release state of the first wheel 40A and the second wheel 40B. As another example, a worker may issue, via a remote operation, an instruction to rotate the first wheel 40A and the second wheel 40B and to switch between the attracted state and the attraction release state of the first wheel 40A and the second wheel 40B.

Next, a wall-traversing vehicle according to another embodiment will be described with reference to Figs. 14 to 19B. Hereinafter, the description of the configuration common to the wall-traversing vehicle according to the embodiment described with reference to Figs. 1 to 8 will be omitted.

Fig. 14 is a side view of the wall-traversing vehicle according to the present embodiment. In the embodiment shown in Fig. 1, the vehicle body 20 includes a protrusion portion 22A that protrudes forward of the main body 21. In the present embodiment, the vehicle body 20 further includes a protrusion portion 22B that protrudes rearward of the main body 21 and an auxiliary wheel 23B attached to a distal end of the protrusion portion 22B. The auxiliary wheel 23B protrudes rearward of the second wheel 40B. Further, the auxiliary wheel 23B protrudes rearward of a rear distal end of the load 75. A contact sensor 24B detects that the auxiliary wheel 23B comes into contact with an obstacle.

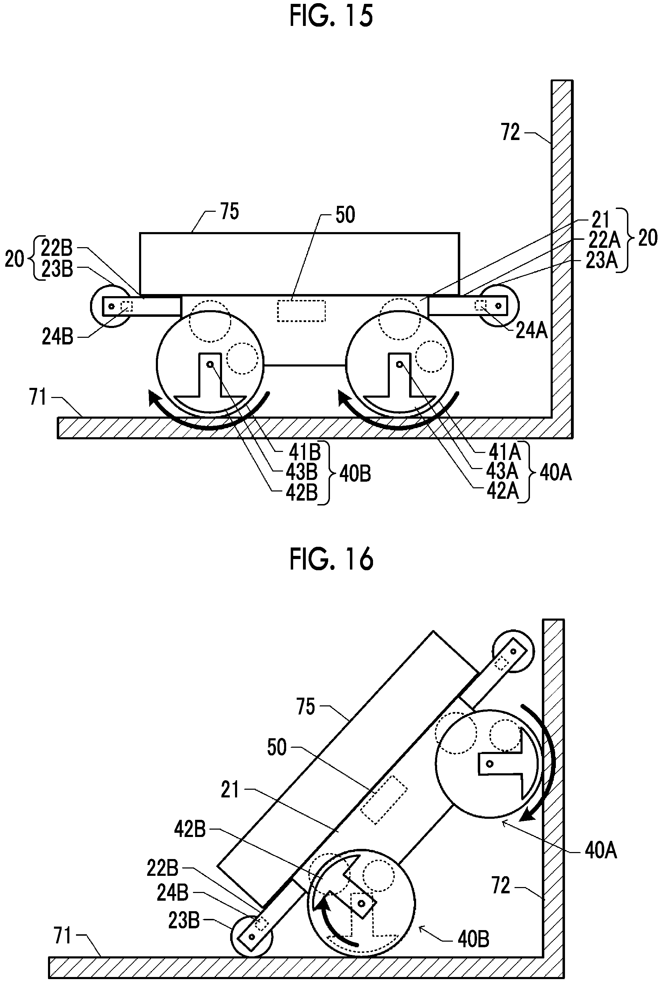

The wall-traversing vehicle according to the embodiment shown in Figs. 1 to 8 can travel in any one of the first traveling mode, the second traveling mode, the third traveling mode, and the wall surface traveling mode. On the other hand, the wall-traversing vehicle according to the present embodiment can travel in a fourth traveling mode. Hereinafter, these traveling modes will be described with reference to Figs. 15 to 18.

Fig. 15 is a side view showing a positional relationship among the wall-traversing vehicle when traveling in the first traveling mode, the first surface 71, and the second surface 72. As in the first traveling mode of the wall-traversing vehicle according to the embodiment shown in Fig. 3, the control unit 50 rotates the first wheel 40A and the second wheel 40B to perform the traveling on the first surface 71. Also in the second traveling mode and the third traveling mode of the wall-traversing vehicle according to the present embodiment, the control unit 50 executes the same control as that in the second traveling mode and the third traveling mode of the wall-traversing vehicle according to the embodiment shown in Figs. 5 and 6.

Fig. 16 is a side view showing a positional relationship among the wall-traversing vehicle when switching from the third traveling mode to the fourth traveling mode, the first surface 71, and the second surface 72. When the traveling in the third traveling mode is continued in a state where the first wheel 40A is attracted to the second surface 72 and the second wheel 40B is attracted to the first surface 71, the auxiliary wheel 23B on the rear side comes into contact with the first surface 71. When the control unit 50 detects that the auxiliary wheel 23B on the rear side comes into contact with the first surface 71 from the detection result of the contact sensor 24B, the control unit 50 sets the second wheel 40B to the attraction release state. Specifically, the oscillating magnet 42B of the second wheel 40B is directed toward a direction of the main body 21 of the vehicle body 20.

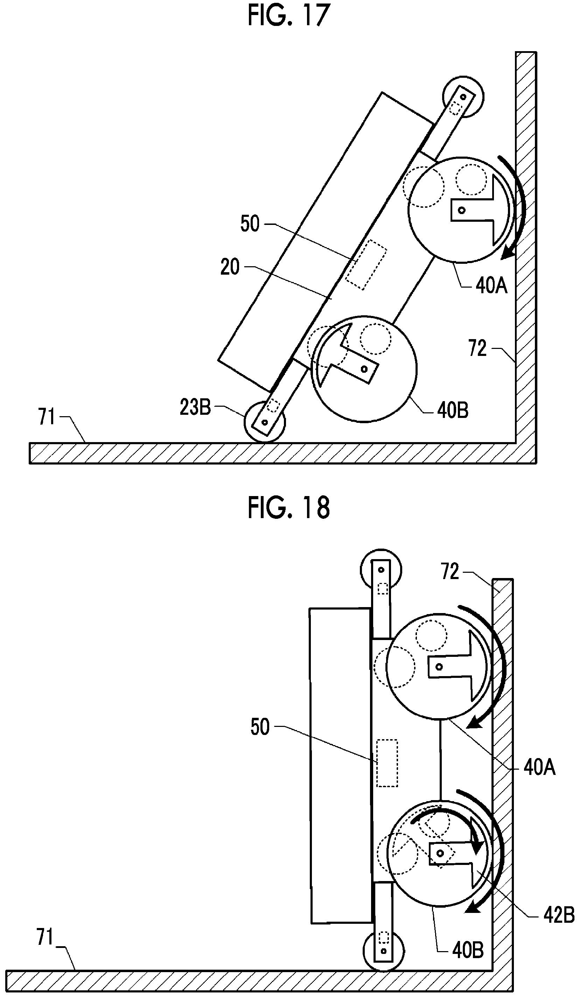

Fig. 17 is a side view showing a positional relationship among the wall-traversing vehicle when traveling in the fourth traveling mode, the first surface 71, and the second surface 72. In the fourth traveling mode, the first wheel 40A is attracted to the second surface 72, the second wheel 40B is set to the attraction release state, and the first wheel 40A is rotated. As a result, the first wheel 40A travels upward on the second surface 72, and the auxiliary wheel 23B on the rear side rolls on the first surface 71 and moves toward the second surface 72. The second wheel 40B is lifted off the first surface 71. In the fourth traveling mode, the vehicle body 20 is supported by the first wheel 40A and the auxiliary wheel 23B on the rear side.

Fig. 18 is a side view showing a positional relationship among the wall-traversing vehicle when switching from the fourth traveling mode to the wall surface traveling mode, the first surface 71, and the second surface 72. When the second wheel 40B comes into contact with the second surface 72, the control unit 50 sets the second wheel 40B in the attracted state. As a result, the oscillating magnet 42B of the second wheel 40B faces a direction of the second surface 72, and the second wheel 40B is attracted to the second surface 72.

In the wall surface traveling mode, as in the embodiment shown in Fig. 8, by rotating the first wheel 40A and the second wheel 40B in a state where the first wheel 40A and the second wheel 40B are both attracted to the second surface 72, the wall-traversing vehicle travels upward on the second surface 72.

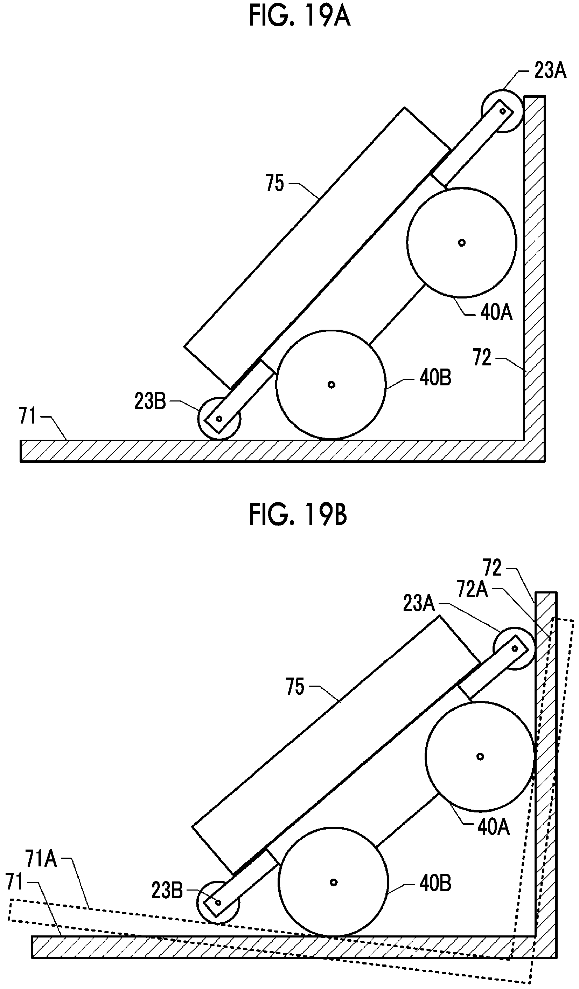

Next, a preferable positional relationship among the first wheel 40A, the second wheel 40B, the auxiliary wheels 23A and 23B will be described with reference to Figs. 19A and 19B. Figs. 19A and 19B are schematic side views showing a positional relationship among the first wheel 40A, the second wheel 40B, the auxiliary wheels 23A and 23B, the first surface 71, and the second surface 72.

As shown in Fig. 19A, when the wall-traversing vehicle moves from the first surface 71 to the second surface 72, and the auxiliary wheel 23B on the rear side comes into contact with the first surface 71 before the first wheel 40A comes into contact with the second surface 72, the driving force of the wall-traversing vehicle is transmitted to neither the first surface 71 nor the second surface 72. Therefore, the wall-traversing vehicle cannot climb up the second surface 72. In order for the wall-traversing vehicle to move from the first surface 71 to the second surface 72 and to be able to travel upward on the second surface 72, it is preferable that the two auxiliary wheels 23A and 23B are prevented from simultaneously coming into contact with the first surface 71 and the second surface 72.

As shown in Fig. 19B, it is preferable that the second wheel 40B is in a state of being in contact with the first surface 71 and the auxiliary wheel 23B on the rear side is in a state of being lifted off the first surface 71 when the first wheel 40A and the auxiliary wheel 23A on the front side are in a state of being simultaneously in contact with the second surface 72. Further, as shown by a broken line in Fig. 19B, it is preferable that the first wheel 40A is in a state of being in contact with the second surface 72A, and the auxiliary wheel 23A on the front side is in a state of being lifted off the second surface 72A when the second wheel 40B and the auxiliary wheel 23B on the rear side are in a state of being simultaneously in contact with the first surface 71A.

Next, a superior effect of the present embodiment will be described.

When the third traveling mode shown in Fig. 16 transitions to the fourth traveling mode, in a case where the protrusion portion 22A that protrudes rearward is not provided, a portion of the load 75 that protrudes rearward may come into contact with the first surface 71 before the second wheel 40B comes into contact with the second surface 72. The friction force generated between the first surface 71 and the load 75 acts in a direction of hindering the traveling of the first wheel 40A performed by the rotation of the first wheel 40A.

On the other hand, in the present embodiment, as shown in Fig. 16, the auxiliary wheel 23B comes into contact with the first surface 71, and thus the load 75 does not come into contact with the first surface. The friction force generated between the first surface 71 and the auxiliary wheel 23B is the force caused by rolling friction and is sufficiently small, and thus this friction force does not hinder the traveling of the first wheel 40A. Therefore, even in a case where the rear distal end of the load 75 protrudes beyond the second wheel 40B, the wall-traversing vehicle can move from the first surface 71 to the second surface 72.

Further, in the present embodiment, the wall-traversing vehicle can move from the first surface 71 to the second surface 72 even when the wall-traversing vehicle travels rearward toward the second surface 72 on the first surface 71.

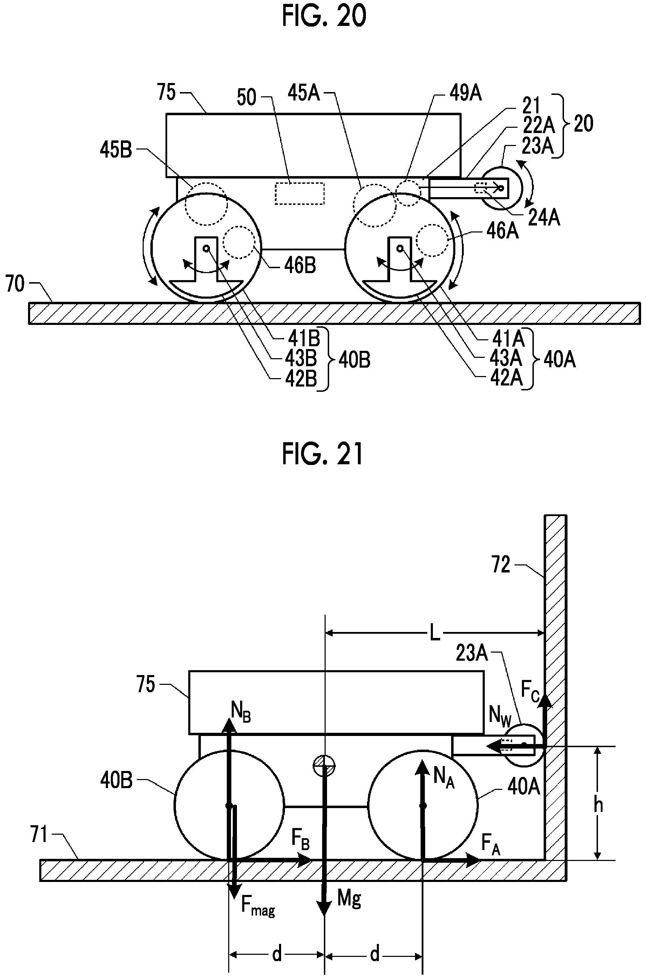

Next, a wall-traversing vehicle according to still another embodiment will be described with reference to Figs. 20 to 22. Hereinafter, the description of the configuration common to the wall-traversing vehicle according to the embodiment described with reference to Figs. 1 to 8 will be omitted.

Fig. 20 is a side view of the wall-traversing vehicle according to the present embodiment. The auxiliary wheel 23A of the wall-traversing vehicle according to the embodiment described with reference to Figs. 1 to 8 is passively rotated only by the friction force with the wall surface. On the other hand, in the present embodiment, the auxiliary wheel motor 49A rotates the auxiliary wheel 23A. In this way, the auxiliary wheel 23A rotates actively.

Fig. 21 is a schematic side view showing a state where the wall-traversing vehicle according to the present embodiment travels on the first surface 71 toward the second surface 72 and the auxiliary wheel 23A is in contact with the second surface 72. In the present embodiment, in addition to the force shown in Fig. 10, the driving force $F_C$ acts on the wall-traversing vehicle by rotationally driving the auxiliary wheel 23A. The driving force $F_C$ generates the counterclockwise moment in the wall-traversing vehicle.

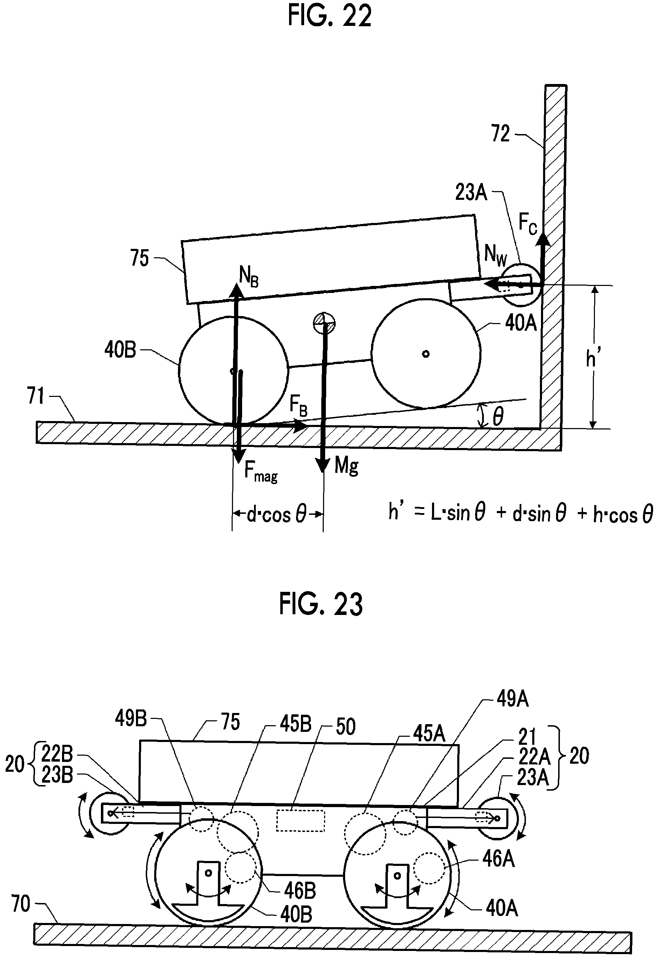

Fig. 22 is a schematic side view showing a state where the first wheel 40A of the wall-traversing vehicle according to the present embodiment is lifted off the first surface 71. In the present embodiment, in addition to the force shown in Fig. 11, the driving force $F_C$ acts on the wall-traversing vehicle by rotationally driving the auxiliary wheel 23A. The driving force $F_C$ generates the moment for rotating the wall-traversing vehicle counterclockwise. Since the moment caused by the driving force $F_C$ is added to the left side of Expression (4), a condition imposed on the position of the auxiliary wheel 23A in order for the wall-traversing vehicle to climb up the second surface 72 is relaxed.

Next, a superior effect of the embodiment shown in Figs. 20 to 22 will be described.

In the present embodiment, the auxiliary wheel 23A rotates actively, so that the wall-traversing vehicle is easily moved from the first surface 71 to the second surface 72.

Next, a wall-traversing vehicle according to still another embodiment will be described with reference to Figs. 23 to 27. Hereinafter, the description of the configuration common to the wall-traversing vehicle according to the embodiment described with reference to Figs. 14 to 18 will be omitted.

Fig. 23 is a side view of the wall-traversing vehicle according to the present embodiment. In the embodiment shown in Figs. 14 to 18, the auxiliary wheels 23A and 23B are rotated passively. However, in the present embodiment, the auxiliary wheels 23A and 23B rotate actively, as in the embodiment shown in Fig. 20. For example, the auxiliary wheel motors 49A and 49B apply the rotation force to the auxiliary wheels 23A and 23B, respectively.

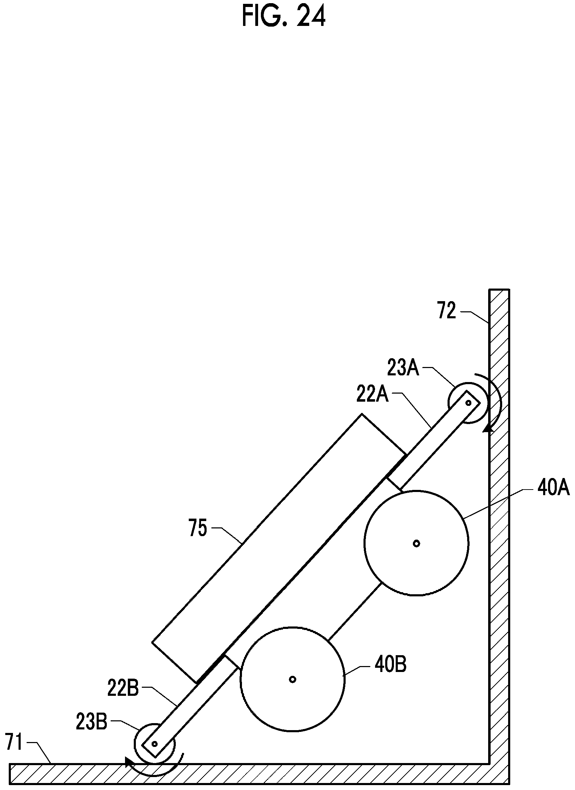

Fig. 24 is a schematic side view showing a state of an intermediate stage in which the wall-traversing vehicle moves from the first surface 71 to the second surface 72. The auxiliary wheel 23A on the front side is in contact with the second surface 72, the auxiliary wheel 23B on the rear side is in contact with the first surface 71, and both the first wheel 40A and the second wheel 40B are lifted off the first surface 71 and the second surface 72. In this state, the wall-traversing vehicle can move from the first surface 71 to the second surface 72 by rotationally driving at least one of the auxiliary wheels 23A and 23B.

Next, a superior effect of the embodiment shown in Figs. 23 and 24 will be described. In the embodiment shown in Figs. 14 to 18, when the protrusion portions 22A and 22B are made too long, as shown in Fig. 19A, the driving force of the first wheel 40A and the second wheel 40B is not transmitted to the second surface 72 and the first surface 71, and the wall-traversing vehicle cannot move from the first surface 71 to the second surface 72. On the other hand, in the present embodiment, as shown in Fig. 24, even when the protrusion portions 22A and 22B are made long, the wall-traversing vehicle can move from the first surface 71 to the second surface 72. Therefore, an upper limit of the size of the load 75 that can be loaded is relaxed.

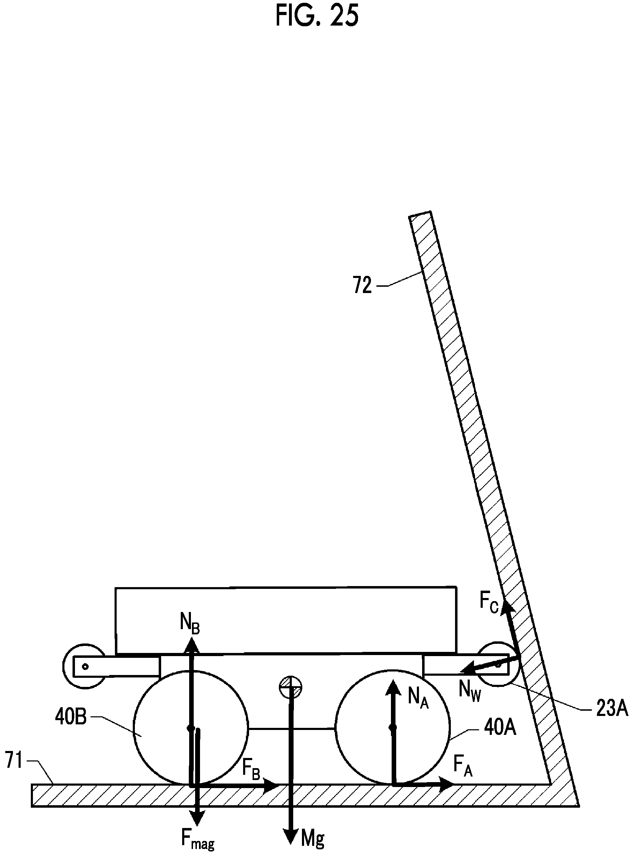

Further, another superior effect of the embodiment shown in Figs. 23 and 24 will be described with reference to Figs. 25 to 27. Figs. 25 to 27 are schematic side views showing a positional relationship among the wall-traversing vehicle, the first surface 71, and the second surface 72 in a case where an angle formed between the first surface 71 and the second surface 72 is an acute angle, that is, in a case where the second surface 72 overhangs the first surface 71.

As shown in Fig. 25, the wall-traversing vehicle travels on the first surface 71 toward the second surface 72, and the auxiliary wheel 23A on the front side comes into contact with the second surface 72. The first wheel 40A is set to the attraction release state. When the ground contact point of the second wheel 40B is used as a rotation center, the gravity Mg generates the clockwise moment in the wall-traversing vehicle, and the driving force $F_C$ of the auxiliary wheel 23A generates the counterclockwise moment. The normal force $N_W$ acting on the auxiliary wheel 23A may generate the clockwise moment or may generate the counterclockwise moment depending on a positional relationship between the contact point between the auxiliary wheel 23A and the second surface 72 and the ground contact point of the second wheel 40B. In a case where the composite moment of these moments is counterclockwise, the first wheel 40A of the wall-traversing vehicle is lifted off the first surface 71.

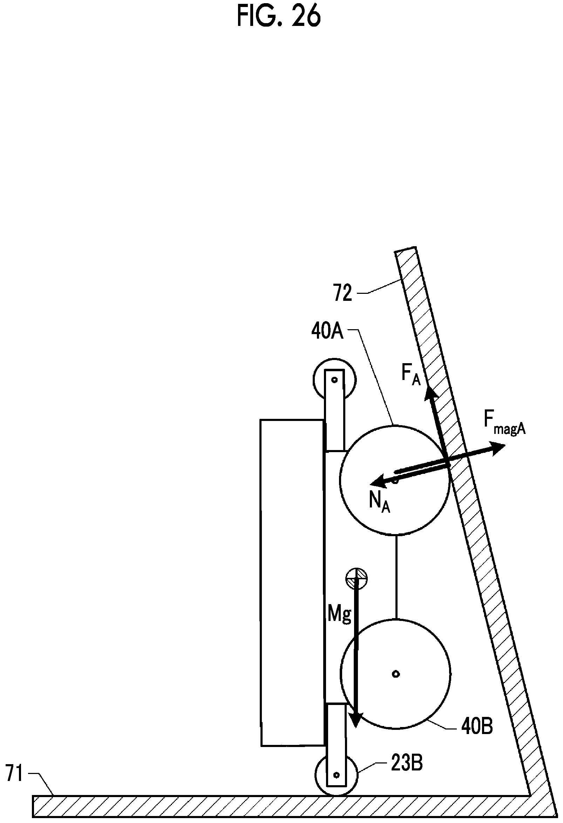

As shown in Fig. 26, when the first wheel 40A is set to the attracted state in a state where the first wheel 40A is in contact with the second surface 72, the attraction force $F_{magA}$ is generated. When the driving force $F_A$ is generated in the first wheel 40A, the first wheel 40A moves upward along the second surface 72. When the auxiliary wheel 23B on the rear side is separated from the first surface 71, the moment about the ground contact point of the first wheel 40A as a rotation center is only the gravity Mg. Since the gravity Mg generates the moment for rotating the wall-traversing vehicle counterclockwise, the second wheel 40B approaches the second surface 72.

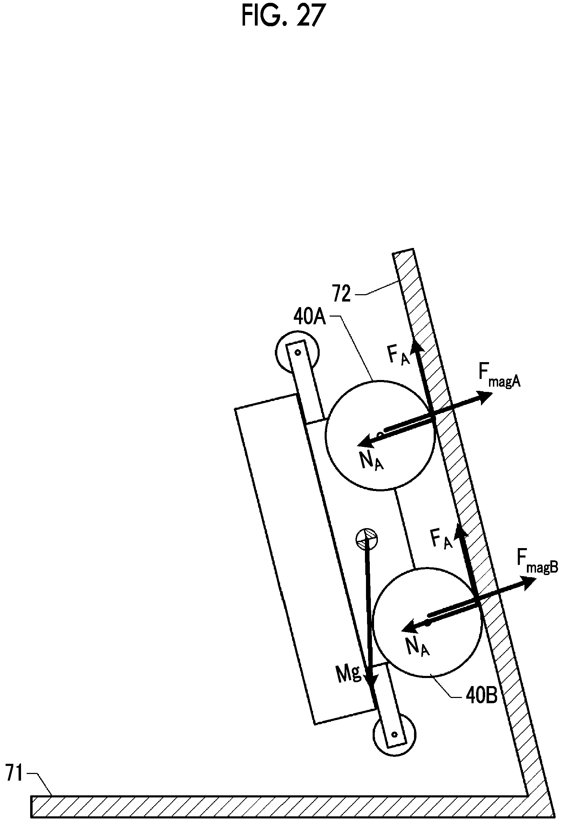

As shown in Fig. 27, when the second wheel 40B comes into contact with the second surface 72, the second wheel 40B is set to the attracted state. As a result, the attraction force $F_{magB}$ is generated. Thereafter, the wall-traversing vehicle travels upward on the second surface 72 by the driving force $F_A$ of the first wheel 40A and the driving force $F_B$ of the second wheel 40B.

As described above, in the present embodiment, even in a case where the second surface 72 overhangs the first surface 71, the wall-traversing vehicle can move from the first surface 71 to the second surface 72.

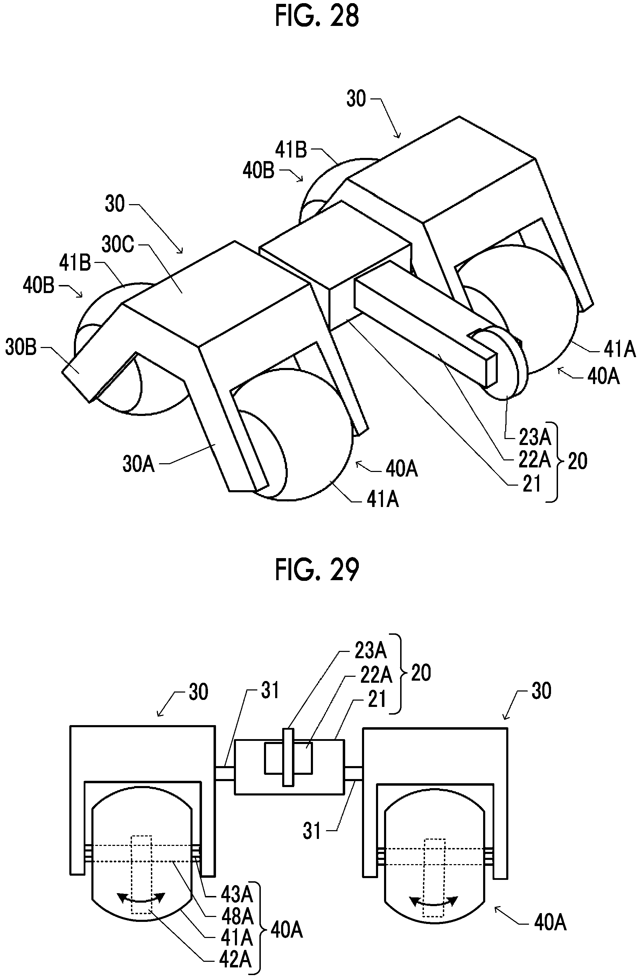

Next, a wall-traversing vehicle according to still another embodiment will be described with reference to Figs. 28 to 31. Hereinafter, the description of the configuration common to the wall-traversing vehicle according to the embodiment described with reference to Figs. 1 to 8 will be omitted.

Figs. 28 and 29 are a perspective view and a front view of the wall-traversing vehicle according to the present embodiment, respectively. The wall-traversing vehicle according to the present embodiment includes the vehicle body 20, the two first wheels 40A, and the two second wheels 40B as in the wall-traversing vehicle according to the embodiment described with reference to Figs. 1 to 8. The vehicle body 20 includes the main body 21, a protrusion portion 22A, and an auxiliary wheel 23A. For example, a fixing portion (not shown) for fixing a work attachment (not shown) for performing work such as welding, painting, and appearance inspection is loaded in the main body 21.

When the main body 21 is seen from the front side on which the protrusion portion 22A protrudes, two rocker links 30 are respectively attached to the right side and the left side of the main body via a shaft 31. One first wheel 40A and one second wheel 40B are attached to the main body 21 of the vehicle body 20 via one rocker link 30, and the other first wheel 40A and the other second wheel 40B are attached to the main body 21 via the other rocker link 30.

The rocker link 30 can rotate with respect to the vehicle body 20 with the shaft 31 as a rotation center axis. Each of the rocker links 30 has a substantially inverted V-shape in a side view, and includes a central portion 30C, two front portions 30A, and two rear portions 30B. The two front portions 30A extend obliquely downward from the central portion 30C toward the front side, and the two rear portions 30B extend obliquely downward from the central portion 30C toward the rear side.

The rotating body 41A of the first wheel 40A is supported rotatably by the axle 43A between the two front portions 30A. The rotating body 41B of the second wheel 40B is supported rotatably by an axle (not shown) between the two rear portions 30B. The rotating body 41A of the first wheel 40A and the rotating body 41B of the second wheel 40B have a spherical shell shape and includes a cavity therein. The oscillating magnet 42A is supported by a support shaft 48A disposed coaxially with the axle 43A inside the rotating body 41A. The oscillating magnet 42A oscillates about the rotation center axis of the rotating body 41A as an oscillation center by rotating the support shaft 48A.

Further, the oscillating magnet 42A is also oscillatable in the right-left direction when seen from the front side with respect to the support shaft 48A. The oscillation of the oscillating magnet 42A in the right-left direction is passively performed. For example, when the magnetic material approaches the oscillating magnet 42A, the distal end of the oscillating magnet 42A oscillates in the right-left direction to face a direction of the magnetic material.

The two shafts 31 are disposed coaxially with each other. Outer end portions of the two shafts 31 are fixed to the central portion 30C of the rocker link 30. The two shafts 31 are each supported rotatably by the vehicle body 20. The two shafts 31 are connected to each other via a differential gear (not shown) inside the main body 21. The differential gear defines the inclination angle of the main body 21 in the front-rear direction based on a differential rotation of the two shafts 31. For example, when one rocker link 30 is inclined in the front-rear direction with respect to the other rocker link 30, the main body 21 is inclined in the front-rear direction by an angle corresponding to half the inclination angle of the rocker link 30.

Next, a superior effect of the embodiment shown in Figs. 28 and 29 will be described.

In the present embodiment, the two rocker links 30 can be individually rotated (oscillated). Therefore, even in a case where the surface on which the wall-traversing vehicle travels includes a curved surface or unevenness, the two first wheels 40A and the two second wheels 40B can be brought into contact with the traveling surface.

In order to realize a state where all of the four wheels, the two first wheels 40A and the two second wheels 40B, come into contact with the traveling surface including the curved surface or the unevenness, it is not always necessary to provide the main body 21. For example, the two rocker links 30 may be directly connected to each other by one shaft such that the two rocker links 30 can oscillate with respect to each other. In this case, the protrusion portion 22A and the auxiliary wheel 23A need only be provided in any one or both of the two rocker links 30.

In addition, the inclination angle (pitch angle) of the main body 21 in the front-rear direction is an intermediate magnitude of the inclination angles of the two rocker links 30 in the front-rear direction. As a result, the fluctuation in the inclination angle of the main body 21 in the front-rear direction is smaller than the fluctuation in the inclination angle of the two rocker links 30 in the front-rear direction. Therefore, even in a case where the vehicle travels on the traveling surface on which significant unevenness, a pitching deflection angle of the main body 21 can be suppressed.

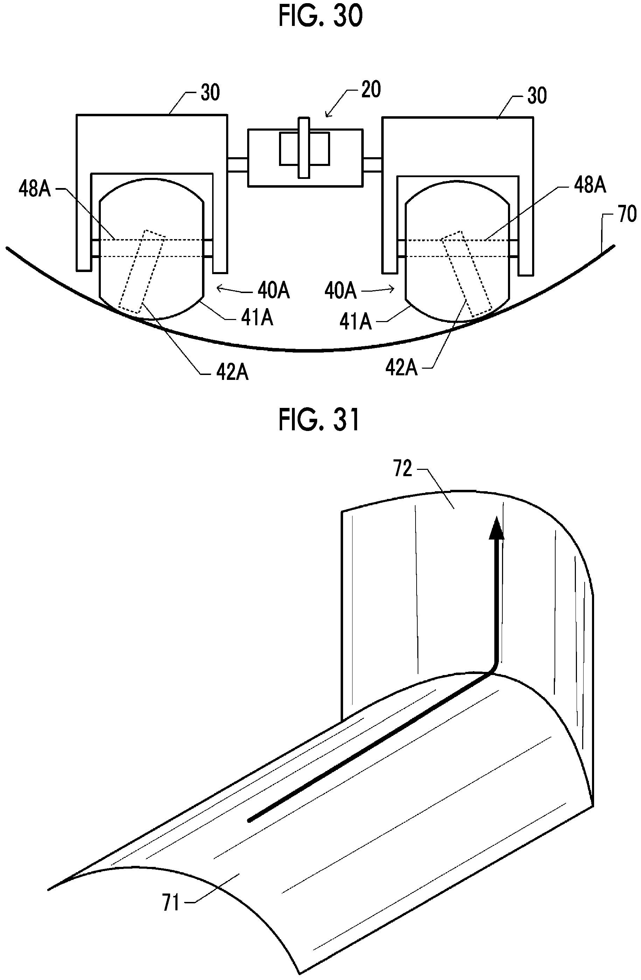

Next, another superior effect of the present embodiment will be described with reference to Figs. 30 and 31. Fig. 30 is a front view of the wall-traversing vehicle when traveling on the wall surface 70 having a concave shape. The wall surface 70 has a shape in which a center thereof is recessed when the wall-traversing vehicle is seen from the front side. Since the rotating body 41A of the first wheel 40A and the rotating body 41B of the second wheel 40B (Fig. 28) have a spherical shell shape, even in a case where the wall surface 70 is curved, both the rotating bodies 41A and 41B are substantially parallel to each other at a contact portion between the wall surface 70 and the rotating bodies 41A and 41B. Therefore, the rotating bodies 41A and 41B can be stably brought into contact with the wall surface 70.

Further, since the oscillating magnet 42A is oscillatable in the right-left direction when seen from the front side, the posture of the oscillating magnet 42A is changed such that the oscillating magnet 42A faces the contact portion between the rotating body 41A and the wall surface 70 by the magnetic force of the oscillating magnet 42A. Therefore, the attraction force of the first wheel 40A to the wall surface 70 can be increased. The same applies to the second wheel 40B (Fig. 28).

Further, even in a case where the wall surface 70 has a convex shape when the wall-traversing vehicle is seen from the front side, the rotating bodies 41A and 41B can stably come into contact with the wall surface 70 and can increase the attraction force.

Fig. 31 is a perspective view showing a wall surface in which the second surface 72 having a concave shape rises from the first surface 71 having a convex shape. The wall-traversing vehicle according to the present embodiment can stably travel on the curved traveling surface and can obtain a large attraction force. Therefore, the wall-traversing vehicle can move from the first surface 71 having a convex shape to the second surface 72 having a concave shape as shown in Fig. 31. On the contrary, even in a case where the first surface 71 is curved in a concave shape and the second surface 72 is curved in a convex shape, the first surface 71 can move to the second surface 72.

The wall-traversing vehicle according to the present embodiment can be used for various types of processing and inspections of a steel structure at a construction site. In addition, the present invention can be used for various types of processing and inspections for a ship body of a ship under construction or under maintenance, for various types of processing and inspections for a steel structure such as a large container or a large crane, and the like.

Each of the above-described embodiments is an example, and it goes without saying that partial substitution or combination of the configurations shown in different embodiments can be made. The same operation and effects as those of the plurality of embodiments having the same configuration will not be repeatedly described for each embodiment. Further, the present invention is not limited to the above-described embodiment. For example, it is obvious to those skilled in the art that various changes, improvements, combinations, and the like can be made.

<Second Embodiment>

Hereinafter, a second embodiment of the present invention will be described in detail with reference to the drawings.

[Configuration of Modeling System]

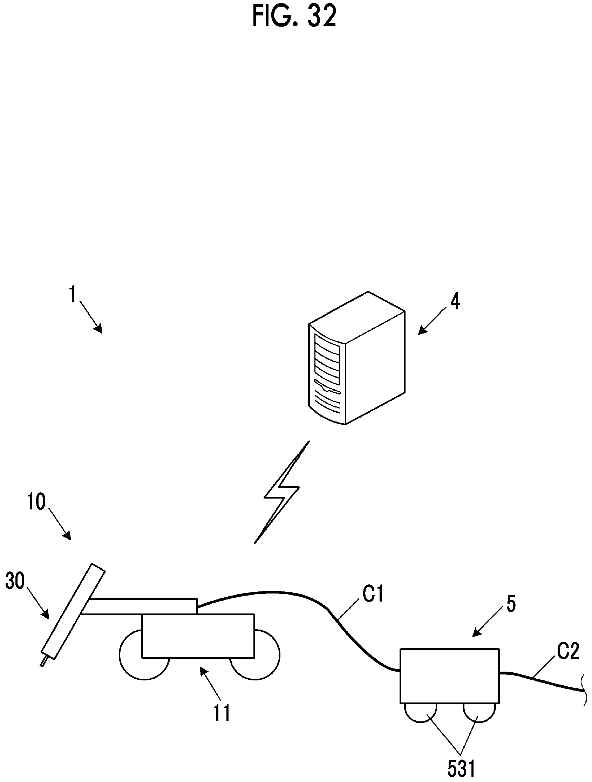

Fig. 32 is a conceptual diagram showing a modeling system 1 according to the present embodiment. As shown in Fig. 32, the modeling system 1 manufactures a three-dimensional modeled product made of metal, by using a modeling robot 10. Specifically, the modeling system 1 includes the modeling robot 10, a wire feeder 5, and a control device 4.

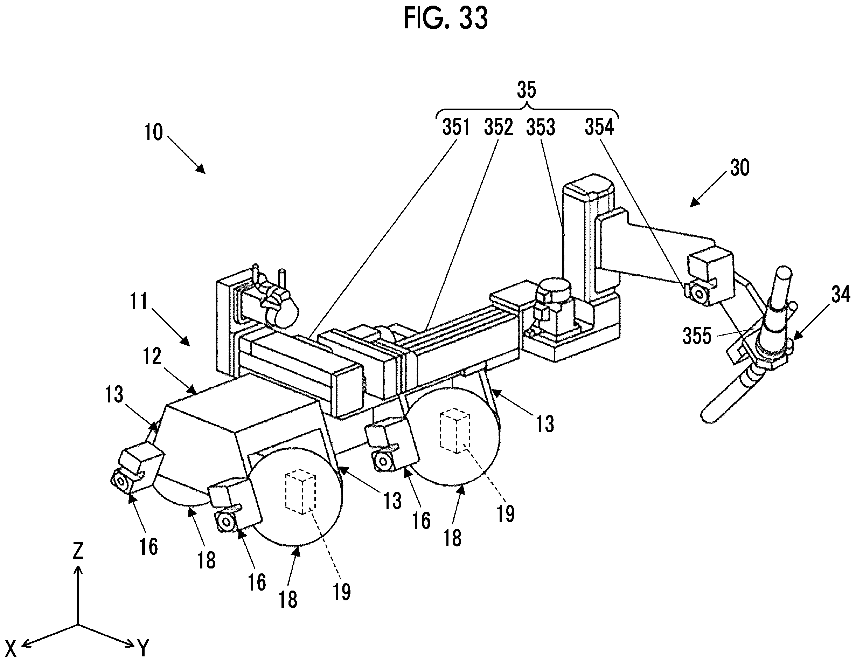

Fig. 33 is a perspective view of the modeling robot 10.

As shown in Fig. 33, the modeling robot 10 is a three-dimensional modeling device using a so-called wire arc additive manufacturing (WAAM) method that manufactures a three-dimensional modeled product by laminating molten metal.

In the following description of the configuration, directions of X, Y, and Z that are orthogonal to each other are set as shown in each drawing. As an example, an XY plane is horizontal, and a Z direction is a vertical direction.

Specifically, the modeling robot 10 includes a vehicle body 11 and a modeling mechanism 30 loaded on the vehicle body 11. The configuration of the modeling robot 10 (vehicle body 11) may be the same as the configuration of the wall-traversing vehicle according to the first embodiment.

The vehicle body 11 is an example of a moving mechanism according to the present invention, and includes a frame 12 on which the modeling mechanism 30 is loaded, and four wheels 18 that support the frame 12. Each wheel 18 (wheel main body) is formed in a spherical (spherical shell) shape, and is supported rotatably by a pivot support portion 13 provided at the frame 12. A drive unit 16 that rotaionally drives each wheel 18 is fixed to the outside of each pivot support portion 13. The drive unit 16 includes, for example, a gear motor (geared motor), and is connected to the wheel 18. The drive unit 16 operates to rotate the wheel 18. By this rotation, the modeling robot 10 can travel on any surface.

The number of disposed wheels 18 is four in the present embodiment, but the number is not limited thereto.

In addition, an electromagnet 19 (magnetic force generation means) is built in each wheel 18. The electromagnet 19 can change a magnetic pole direction (attraction force generation direction) independently of the rotation of the wheel 18 (outer shell) for movement. The electromagnet 19 generates the magnetic force (attraction force) in a direction perpendicular to a ground contact surface of the wheel 18, and thus traction for traveling is obtained. Further, the wheel 18 can be attracted to a wall surface made of metal and can move on the wall surface. The magnetic force generation means that is built in each wheel 18 is not limited to the electromagnet as long as the magnetic pole direction is changeable, and may be, for example, a permanent magnet.

The modeling mechanism 30 is loaded on the frame 12 of the vehicle body 11. The modeling mechanism 30 is an example of a metal lamination mechanism according to the present invention, and includes a torch 34 and a displacement mechanism 35 that supports the torch 34 to be displaceable.

The torch 34 is a work tool that melts a wire (filler) W made of metal, by arc discharge. The modeling robot 10 (modeling mechanism 30) manufactures the three-dimensional modeled product made of metal, by melting and laminating the wire W made of metal with the torch 34 using a welding method such as MIG, MAG, or TIG.

The displacement mechanism 35 includes a first moving mechanism 351, a second moving mechanism 352, a third moving mechanism 353, and a pivot mechanism (angle adjusting mechanism) 354.

The first moving mechanism 351 is a mechanism that moves the torch 34 in the Y direction with respect to the vehicle body 11.

The second moving mechanism 352 is connected to the first moving mechanism 351. The second moving mechanism 352 is a mechanism that moves the torch 34 with respect to the vehicle body 11 in the X direction.

The third moving mechanism 353 is connected to the second moving mechanism 352. The third moving mechanism 353 is a mechanism that moves the torch 34 with respect to the vehicle body 11 in the up-down direction (Z direction).

The pivot mechanism 354 is connected to the third moving mechanism 353. The pivot mechanism 354 is connected to the torch 34 via a connection portion 355. The pivot mechanism 354 is a mechanism that allows the torch 34 to pivot about a horizontal axis with respect to the vehicle body 11.

A position and a posture of the torch 34 can be appropriately changed by the displacement mechanism 35 having such a configuration.

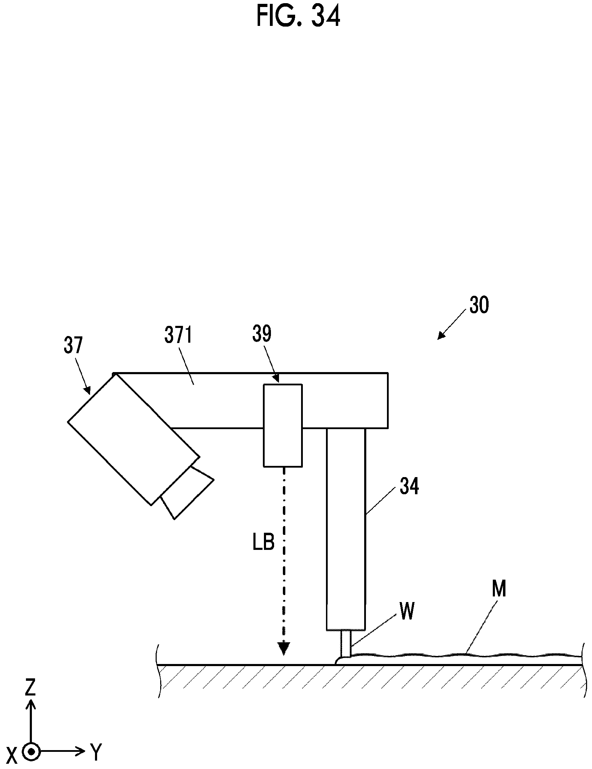

Fig. 34 is a view showing a periphery of a distal end portion of the torch 34.

As shown in Fig. 34, an imaging unit 37 is connected to and supported by the torch 34 via a connection member 371. The imaging unit 37 includes, for example, a CMOS camera or a CCD camera, images an object to be imaged, including the torch 34 and the wire W, and acquires image information thereof. The acquired image information is transmitted to the control device 4. The imaging unit 37 according to the present embodiment images a melting portion (portion in which the wire W is molten) in the periphery of the torch 34 from diagonally above the advancing direction (for example, the -Y direction) side of the modeling robot 10.

A laser beam irradiation unit 39 is also supported by the torch 34. The laser beam irradiation unit 39 irradiates the periphery of the melting portion with a laser beam LB. The laser beam irradiation unit 39 according to the present embodiment is disposed at the same position as the torch 34 in the X direction and adjacent to the torch 34 in the Y direction. As a result, the irradiation with the laser beam LB via the laser beam irradiation unit 39 is performed at the same position as the torch 34 in the X direction. In addition, the laser beam irradiation unit 39 according to the present embodiment is configured to perform irradiation with a line laser beam along the X direction as the laser beam LB. As a result, a shape of metal or the like that has been molded can be accurately detected by the imaging unit 37.

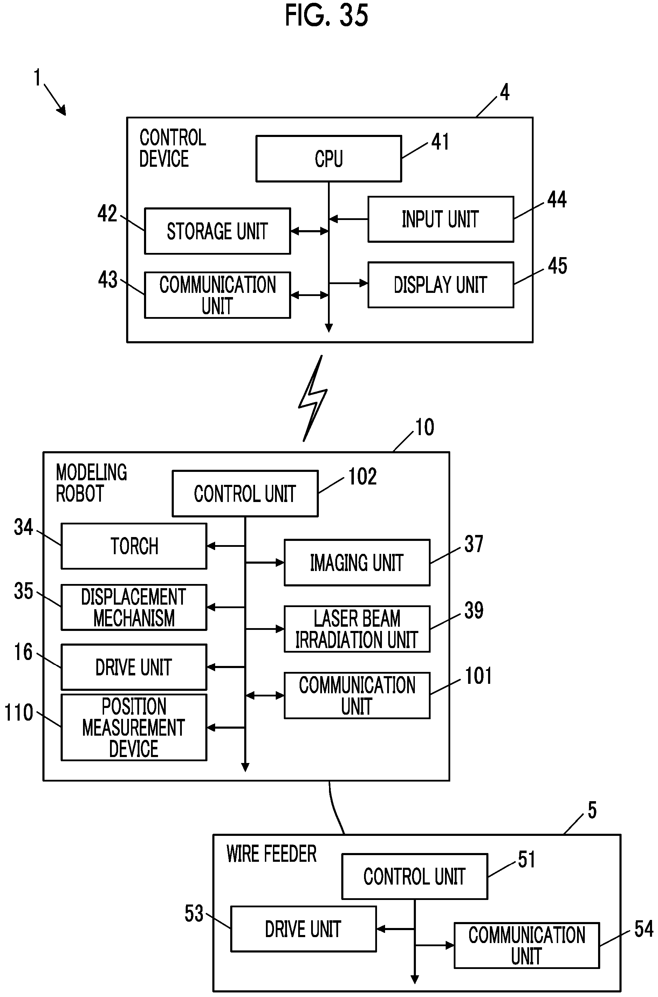

Fig. 35 is a block diagram showing a schematic control configuration of the modeling system 1. As shown in Fig. 35, in addition to the above-described configuration, the modeling robot 10 includes a communication unit 101, a control unit 102, and a position measurement device 110.

The communication unit 101 is a communication device that can transmit and receive various information to and from the control device 4. Specifically, the communication unit 101 receives a signal transmitted from the control device 4 or transmits the image information or the like acquired by the imaging unit 37 to the control device 4.

The control unit 102 controls the operation of each unit of the modeling robot 10, for example, based on an operation instruction from the control device 4 or a predetermined operation program.

The position measurement device 110 measures the position of the modeling robot 10 itself. A specific configuration of the position measurement device 110 is not particularly limited, and for example, a global navigation satellite system (GNSS) may be used. Alternatively, a sensor (inertial measurement device or the like) for measuring the traveling direction and a traveling distance sensor may be used to sequentially integrate traveling direction and distance in a minute time to measure a position, a position of the modeling robot 10 may be measured by detecting a reflector (marker) disposed at each location in the work area with an optical sensor and collating the detected reflector with preset reflector disposition information, or a position of the modeling robot 10 may be calculated based on the position of the metal molded product obtained by performing image processing on a result in which the laser beam LB is imaged by the imaging unit 37.

The control device 4 includes, for example, a personal computer. The control device 4 is electrically connected to the modeling robot 10 and the wire feeder 5, and comprehensively controls the operations of the respective units of the modeling system 1. The "electrical connection" may be either a wireless connection or a wired connection.

Specifically, the control device 4 includes a CPU 41, a storage unit 42, a communication unit 43, an input unit 44, and a display unit 45.

The CPU 41 operates each unit of the control device 4 based on the operation contents of the input unit 44 or the like, loads a program stored in advance in the storage unit 42, and executes various processes in cooperation with the loaded program.

The storage unit 42 is a memory including a random access memory (RAM), a read only memory (ROM), or the like, stores various programs and data, and also functions as a work area of the CPU 41. The storage unit according to the present embodiment stores a program for executing a modeling process described later.

The communication unit 43 is a communication device that can transmit and receive various information to and from the modeling robot 10 and the wire feeder 5.

The input unit 44 is operation means for a user to perform various operations for operating the control device 4, and includes a pointing device, such as a mouse, and a keyboard.

The display unit 45 includes, for example, a liquid crystal display, an organic EL display, or other displays, and displays various information based on a display signal from the CPU 41. The display unit 45 according to the present embodiment displays an image or the like captured by the imaging unit 17. The display unit 45 may be a touch panel serving as a part of the input unit 44.

The wire feeder 5 is a moving robot that supplies the wire W, electric power, and gas to the modeling robot 10 while following the movement of the modeling robot 10. The wire feeder 5 holds the wire W having a sufficient length in a state of being wound around, for example, a wire reel (not shown). In addition, the wire feeder 5 is connected to the modeling robot 10 with a cable C1 having a predetermined length (for example, a maximum of approximately 10 m), and is connected to an electric power/gas supply source (not shown) with a cable C2 having a sufficient length (for example, a maximum of several tens of meters) (see Fig. 32). Then, the wire feeder 5 receives the electric power and the gas supplied from the electric power/gas supply source through the cable C2, and supply the wire W, the electric power, and the gas to the modeling robot 10 through the cable C1.

However, the wire feeder 5 need only be capable of moving independently of the modeling robot 10, and need only be capable of supplying at least the wire W to the modeling robot 10.

Specifically, the wire feeder 5 includes a control unit 51, a drive unit 53, and a communication unit 54.

The control unit 51 controls the operation of each unit of the wire feeder 5 based on, for example, an operation instruction from the control device 4 or the modeling robot 10.

The drive unit 53 rotationally drives a wheel 531 (see Fig. 32) to move the wire feeder 5. A configuration is preferable in which the wheel 531 of the wire feeder 5 is attracted to the wall surface and to obtain the traction, as in the wheel 18 of the modeling robot 10.

The communication unit 54 is a communication device that can transmit and receive various information to and from the control device 4 or the modeling robot 10.

The wire feeder 5 may be configured to control a supply amount of at least one of the wire W, the electric power, and the gas, based on an instruction from the control device 4 or the modeling robot 10.

[Modeling Operation]

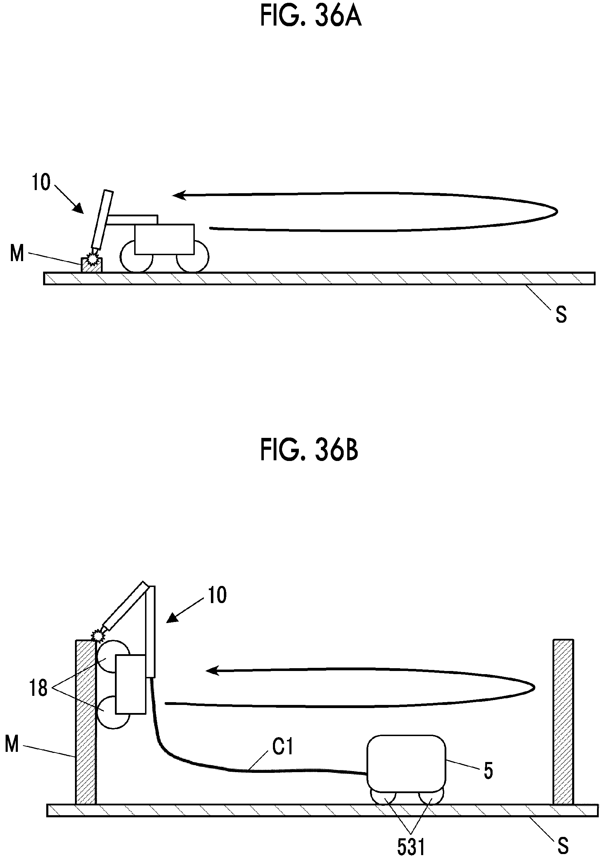

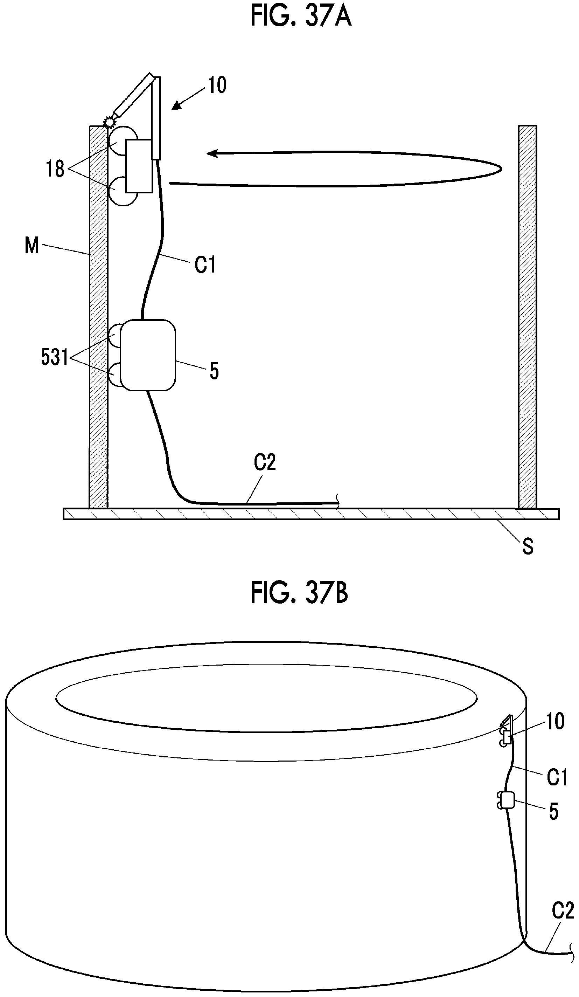

Subsequently, the modeling process that is executed when the modeling system 1 performs three-dimensional modeling will be described. Figs. 36A, 36B, 37A, and 37B are views showing the modeling process.

The modeling process is executed, for example, by the CPU 41 of the control device 4 reading and loading the corresponding program from the storage unit 42 based on a user operation.

When the modeling process is executed, first, the CPU 41 of the control device 4 sets a movement path of the modeling robot 10 and a melting (laminating) timing of the wire W in the movement path, based on a user operation.

Here, when the user inputs desired modeled product shape data (for example, three-dimensional CAD data), the CPU 41 analyzes the shape data to set the movement path and the melting timing, and causes the storage unit 42 to store the data.

Next, the CPU 41 operates the modeling robot 10 based on the set movement path and melting timing of the modeling robot 10.

The control unit 102 of the modeling robot 10 operates each unit based on the operation instruction transmitted from the control device 4. In this manner, the modeling robot 10 moves along the set movement path, supplies the wire W downward from the distal end (lower end) of the torch 34, melts and laminates the wire W, and performs the three-dimensional modeling. The position of the modeling robot 10 is acquired by the position measurement device 110 and is transmitted to the control device 4. In this case, the wire feeder 5 supplies the wire W, the electric power, and the gas to the modeling robot 10 while appropriately moving to be located within a length range of the cable C1 from the modeling robot 10.

Here, the operation of the modeling robot 10 in a case where a cylindrical modeled product is manufactured will be described in detail.

As shown in Fig. 36A, first, the modeling robot 10 travels in a manner that draws circles on a substrate S, for example, and melts and laminates the wire W, so that a metal molded product M in which the molten wire W is solidified is formed in a circular shape. In a case where the metal molded product M has a thickness in a radial direction, the modeling robot 10 need only move in a manner that draws circles having a different radius.

When a height of the metal molded product M exceeds a movable range of the torch 34 in the up-down direction by repeating the lamination, the modeling robot 10 causes the wheel 18 to be attracted the wall surface and further models an upper surface of the metal molded product M while traveling on the wall surface, as shown in Fig. 36B. In a case where a height position of the modeling robot 10 exceeds the length of the cable C1, the wire feeder 5 need only also cause the wheel 531 to be attracted to the wall surface and travel on the wall surface as shown in Fig. 37A.

As a result, as shown in Fig. 37B, a large and long cylindrical modeled product can be suitably modeled.

The shape that can be modeled by the modeling robot 10 is not limited to a cylindrical shape. When the modeling robot 10 can travel on the curved surface, the curved surface shape can be freely modeled, and even a shape that is difficult to travel can be modeled within a range in which the torch 34 can reach.

In addition, a specific operation method of the modeling robot 10 is not particularly limited, and for example, a huge modeled product or the like may be modeled by a plurality of modeling robots 10 in a distributed manner.

[Technical Effect of Second Embodiment]

As described above, according to the present embodiment, the modeling robot 10 includes the vehicle body 11 that can move by being attracted to the wall surface, and the modeling mechanism 30 that can laminate the metal.

As a result, unlike the related art in which a welding tool (robot arm) is moved by a transport device such as a bogie, a crane, or a lifter, there is no restriction on the modeling size due to a movable range of the transport device. Therefore, a larger size of the modeling than in the related art can be formed.

According to the present embodiment, the wire W or the like is supplied from the wire feeder 5 that is movable independently of the modeling robot 10 to the modeling robot 10.

As a result, it is not necessary to load the wire W in the modeling robot 10 itself, and the wire W or the like can be supplied by causing the wire feeder 5 to follow the modeling robot 10. Therefore, the cable C1 for feeding the wire W to the modeling robot 10 cannot be unlimitedly long for reasons such as friction of the wire W passing through the cable C1, but the wire feeder 5 is configured to move independently, so that the movement range of the modeling robot 10, and a range of the modeling size can be expanded.

[Others]

The embodiments of the present invention are described above, but the present invention is not limited to the above-described embodiments.

For example, in the above-described embodiment, the control device 4 controls the operation of the modeling robot 10. However, the control method of the modeling robot 10 is not particularly limited. The modeling robot 10 may be autonomously operated by a program or the like, or may be remotely operated by an operator. In a case of the remote operation, it is preferable to display an image of the welded portion in the periphery of the torch 34 captured by the imaging unit 17 of the modeling robot 10 on the display unit 45 in real time and show the image to the operator.

In the above-described embodiment, the wheel 18 having a spherical shape is attracted to the ground (wall surface) by the magnetic force. However, the shape of the wheel 18, the type of the attraction force, and the like are not particularly limited. For example, the shape or the structure of the wheel 18 may be a barrel shape or may be a general rubber tire, or may be attracted to the surface by the adhesive force of the wheel 18. The same applies to the wheel 531 of the wire feeder 5.

In addition, in the above-described embodiment, the position of the modeling robot 10 is acquired by the position measurement device 110 loaded in the modeling robot 10 itself. However, the position of the modeling robot 10 may be acquired by, for example, a measurement device installed outside.

**EP 4 497 665 A1**

In addition, in the above-described embodiment, the wire feeder 5 receives the electric power and the gas supplied from the electric power/gas supply source. However, for example, an electric power battery or a gas cylinder may be loaded in the wire feeder 5, and the electric power and the gas may be supplied from the electric power battery or the gas cylinder to the modeling robot 10. Alternatively, at least one of the wire W, the electric power supply, and the gas may be loaded in the wire feeder 5 itself, and the other may be supplied from an external supply source.

The specific configuration of the wire feeder 5 is not particularly limited. For example, the wire feeder 5 may be rotatable in a turntable shape such that the cable C1 is not twisted with the modeling robot 10 that operates in an arc shape, or may have a lifting mechanism to easily follow to the height position of the modeling robot 10.

In addition, in the above-described embodiment, as an example of the metal lamination mechanism that can laminate the metal, the modeling mechanism 30 can perform the modeling using the so-called WAAM method is described. However, the metal lamination mechanism according to the present invention is not limited to such a modeling mechanism, and the metal lamination mechanism using a method such as a method used in a 3D printer, such as hardening powder or liquid resin with a laser or the like can be suitably adopted.

In addition, the modeling device according to the present invention is not limited to the device that manufactures the modeled product from zero, and is also suitably applicable to, for example, a device that repairs a sunken hole portion or the like via modeling.

Additionally, the details described in the above-described embodiments can be appropriately changed without departing from the gist of the invention.

Industrial Applicability

As described above, the present invention is useful for enabling stable traveling even when the load protrudes forward of the wheel.

Reference Signs List

20 vehicle body
21 main body
22A, 22B protrusion portion
23A, 23B auxiliary wheel (distal end portion)
24A, 24B contact sensor
30 rocker link
30A front portion of rocker link
30B rear portion of rocker link
30C central portion of rocker link
31 shaft
40A first wheel
40B second wheel
41A, 41B rotating body
42A, 42B oscillating magnet
43A, 43B axle
44A, 44B electromagnet
45A, 45B traveling motor
46A, 46B oscillating magnet posture control motor
47A, 47B electromagnet drive circuit
48A support shaft
49A, 49B auxiliary wheel motor
50 control unit
70 floor surface
71 , 71A first surface
72 , 72A second surface
75 load
1 modeling system
4 control device
5 wire feeder
10 modeling robot

11 vehicle body (moving mechanism)
12 frame
18 wheel
19 electromagnet
30 modeling mechanism (metal lamination mechanism)
34 torch
41 CPU
531 wheel
C1 cable
C2 cable
M metal molded product
W wire

**Claims**

1. A wall-traversing vehicle comprising:

   a vehicle body;
   a first wheel and a second wheel that are attached to the vehicle body, that are attractable to a contact surface, and that are switchable between an attracted state and an attraction release state;
   a traveling motor that rotates the first wheel and the second wheel; and
   a control unit that switches each of the first wheel and the second wheel between the attracted state and the attraction release state and that controls rotation of the first wheel and the second wheel,
   wherein the first wheel and the second wheel are attached at an interval in a traveling direction that is a direction in which the vehicle body moves when the first wheel and the second wheel are rotated, and
   the control unit realizes

   a first traveling mode for traveling on a first surface in a direction from the second wheel toward the first wheel, and
   a second traveling mode for traveling by setting the first wheel to the attraction release state and setting the second wheel to the attracted state in a state where the second wheel is in contact with the first surface, and rotating the second wheel until the first wheel comes into contact with a second surface rising from the first surface in a state where the first wheel is lifted off the first surface.

2. The wall-traversing vehicle according to claim 1,

   wherein the vehicle body includes a first distal end portion that protrudes from the first wheel in a direction from the second wheel toward the first wheel, and
   the control unit realizes the second traveling mode in a state where the first distal end portion is in contact with the second surface.

3. The wall-traversing vehicle according to claim 2,
   wherein the vehicle body includes a first auxiliary wheel provided at the first distal end portion.

4. The wall-traversing vehicle according to any one of claims 1 to 3,
   wherein the control unit further realizes
   a third traveling mode for traveling by setting the first wheel to the attracted state and rotating the first wheel in a state where the first wheel is in contact with the second surface and the second wheel is in contact with the first surface.

5. The wall-traversing vehicle according to any one of claims 1 to 4,

   wherein the vehicle body includes a second distal end portion that protrudes from the second wheel in a direction from the first wheel toward the second wheel, and
   the control unit further realizes
   a fourth traveling mode for traveling by setting the first wheel to the attracted state and setting the second wheel to the attraction release state in a state where the second distal end portion is in contact with the first surface and the first wheel is in contact with the second surface, and rotating the first wheel in a state where the second wheel is lifted off the first surface.

6. The wall-traversing vehicle according to claim 5,
wherein the vehicle body includes a second auxiliary wheel provided at the second distal end portion.

7. The wall-traversing vehicle according to any one of claims 1 to 6,
wherein the control unit further realizes
a wall surface traveling mode for traveling by setting both the first wheel and the second wheel to the attracted state
and rotating the first wheel and the second wheel in a state where the first wheel and the second wheel are in contact
with the second surface.

8. The wall-traversing vehicle according to claim 1, further comprising:
a metal lamination mechanism capable of laminating metal.

## FIG. 1

## FIG. 2

## FIG. 3

## FIG. 4

## FIG. 5

## FIG. 6

## FIG. 7

## FIG. 8

## FIG. 9

## FIG. 10

# FIG. 11

$$h' = L \cdot \sin\theta + d \cdot \sin\theta + h \cdot \cos\theta$$

# FIG. 12

## FIG. 13

## FIG. 14

## FIG. 15

## FIG. 16

## FIG. 17

## FIG. 18

## FIG. 19A

## FIG. 19B

# FIG. 20

# FIG. 21

## FIG. 22

$$h' = L \cdot \sin\theta + d \cdot \sin\theta + h \cdot \cos\theta$$

## FIG. 23

# FIG. 24

## FIG. 25

# FIG. 26

# FIG. 27

# FIG. 28

# FIG. 29

# FIG. 30

# FIG. 31

# FIG. 32

FIG. 33

# FIG. 34

# FIG. 35

## FIG. 36A

## FIG. 36B

# FIG. 37A

# FIG. 37B

## INTERNATIONAL SEARCH REPORT

| International application No. |
|---|
| **PCT/JP2023/011159** |

**A. CLASSIFICATION OF SUBJECT MATTER**

***B62D 57/02***(2006.01)i; ***B22F 12/50***(2021.01)i; ***B23K 9/032***(2006.01)i; ***B23K 9/04***(2006.01)i; ***B23K 9/12***(2006.01)i;
***B33Y 30/00***(2015.01)i; ***B60B 19/00***(2006.01)i
FI: B62D57/02 L; B22F12/50; B23K9/032 Z; B23K9/04 G; B23K9/04 Z; B23K9/12 331A; B33Y30/00; B60B19/00 J

According to International Patent Classification (IPC) or to both national classification and IPC

**B. FIELDS SEARCHED**

Minimum documentation searched (classification system followed by classification symbols)

B62D57/02; B22F12/50; B23K9/032; B23K9/04; B23K9/12; B33Y30/00; B60B19/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 111661192 A (SHANGHAI UNIVERSITY OF ENGINEERING SCIENCE) 15 September 2020 (2020-09-15) <br> paragraphs [0049]-[0066], fig. 1-7 | 1, 4, 7 |
| Y | | 2-3, 5-6, 8 |
| Y | CN 110667719 A (SHANDONG JIAOTONG UNIVERSITY) 10 January 2020 (2020-01-10) <br> paragraphs [0048]-[0062], fig. 1-3 | 2-3, 5-6 |
| Y | JP 2008-127622 A (URAKAMI, Fukashi) 05 June 2008 (2008-06-05) <br> paragraph [0008], fig. 1-6 | 8 |
| A | JP 2019-90264 A (OSAKA CITY UNIVERSITY) 13 June 2019 (2019-06-13) | 1-8 |
| A | JP 2015-209172 A (JFE STEEL CORP.) 24 November 2015 (2015-11-24) | 1-8 |

☐ Further documents are listed in the continuation of Box C.   ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **23 May 2023** | **06 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/011159**

| Patent document cited in search report | | | Publication date (day/month/year) | Patent family member(s) | Publication date (day/month/year) |
|---|---|---|---|---|---|
| CN | 111661192 | A | 15 September 2020 | (Family: none) | |
| CN | 110667719 | A | 10 January 2020 | (Family: none) | |
| JP | 2008-127622 | A | 05 June 2008 | WO 2008/072364 A1 paragraph [0008], fig. 1-6 | |
| JP | 2019-90264 | A | 13 June 2019 | (Family: none) | |
| JP | 2015-209172 | A | 24 November 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022007174 A